# FASCICULE DE BREVET EUROPEEN

(11) **EP 0 589 755 B1**
(45) Date de publication et mention de la délivrance du brevet: **29.01.1997**
(21) Numéro de dépôt: 93402250.0
(22) Date de dépôt: 15.09.1993
(51) Int. Cl.: A63F 3/06

(54) **Terminal de jeux**
Spielterminal
Game terminal

(30) Priorité: 22.09.1992 FR 9211275
(43) Date de publication de la demande: 30.03.1994
(73) Titulaire: INTERNATIONALE DES JEUX, F-92643 Boulogne Billancourt Cédex (FR)
(72) Inventeur: Gatto, Jean-Marie, F-75016 Paris (FR); Bertrand, Dominique, F-75017 Paris (FR)
(74) Mandataire: Obolensky, Michel

(56) Documents cités:
- EP-A- 0 427 600
- EP-A- 0 450 520
- WO-A-82/02968
- AT-B- 391 218
- DE-A- 3 837 163
- FR-A- 2 567 031
- GB-A- 2 180 460
- GB-A- 2 226 252

## Description

La présente invention est relative aux terminaux de jeux organisés à l'échelle nationale tels que les jeux de loterie, de loto, de paris mutuels ou autres.

De tels terminaux font généralement partie de systèmes de prise de jeux.

Un système de prise de jeux comporte généralement des terminaux de prise de jeux placés dans des bureaux de jeux fréquentés par les joueurs qui déposent dans ces bureaux des bulletins de jeux qu'ils ont remplis, accompagnés du versement d'une somme d'argent correspondant à l'enjeu qu'ils engagent.

En contrepartie, ils reçoivent un reçu qu'ils conservent jusqu'au tirage.

Les terminaux de prise de jeu sont soit reliés par un réseau de communication à un système central de traitement ou centre serveur et sont des terminaux dits "on line", soit autonomes dits "off line".

Les terminaux de jeu sont habituellement équipés de dispositifs d'analyse de bulletins de jeu et souvent de dispositifs séparés d'analyse de reçus pour déterminer après tirage les porteurs de reçus qui doivent recevoir des gains ainsi que les montants de ces gains.

Le traitement d'un bulletin de jeu est réalisé en introduisant ce bulletin dans un dispositif d'analyse de bulletin d'un terminal.

Ce bulletin est analysé en pixels et l'image obtenue est traitée par voie numérique.

Le traitement précité détermine le type de bulletin, le type de marques ou signes inscrits sur le bulletin par les joueurs, et prépare une trame codée qui est transmise au système central de traitement qui enregistre la transaction correspondante dans une mémoire.

Une fois la transaction enregistrée, un code de validation est envoyé au terminal qui imprime un reçu qui marque l'engagement de l'organisme de jeu envers le joueur de paiement en cas de gain.

Le terminal comporte en outre des moyens d'analyse du reçu après tirage pour déterminer si le porteur du reçu a gagné ou non.

Après lecture du reçu, le numéro codé qu'il porte est transmis par le terminal au système central qui interroge le fichier des gagnants.

Si le numéro du reçu en question figure dans le fichier, une autorisation de paiement est transmise au terminal correspondant.

On connaît d'après GB-A-2 226 252 un terminal de validation de coupons pour interpréter des coupons qui lui sont présentés, chacun de ces coupons portant un code barre ayant des données relatives à des dates de période de validation et un code de message :
- une horloge en temps réel pour assurer un enregistrement de l'heure et de la date en cours ;
- des moyens pour stocker un ou plusieurs codes de numéros gagnants ;
- des moyens pour recevoir un coupon présenté au système et en réponse pour lire ledit code barre ; et
- des moyens pour comparer lesdites dates de période de validation avec l'enregistrement de l'heure et de la date en cours et si l'enregistrement de l'heure et de la date en cours ne se trouve pas dans les dates de la période de validation, rejeter ledit coupon, et si l'enregistrement de l'heure et de la date en cours se trouve dans les dates de la période de validation, comparer lesdits un ou plusieurs codes de numéros gagnants avec ledit code de message et en cas d'égalité engendrer un message pour indiquer que ledit coupon est un gagnant tandis que si lesdits un ou plusieurs codes de numéros gagnants et ledit code de message ne sont pas égaux, engendrer un autre message indiquant que ce coupon n'est pas un gagnant.

Il s'agit donc d'un système fonctionnant sur des bulletins ou coupons portant des données de jeu sous forme de codes barres imprimés par une autre machine.

L'invention vise à perfectionner les terminaux de jeu existants en créant un terminal de jeux, qui assure un maximum des fonctions énoncées ci-dessus tout en présentant une construction la plus compacte et modulaire possible et un mode d'utilisation le plus simple et le plus sur possible.

Elle vise également à réaliser un terminal dont la construction et l'utilisation présentent de grandes possibilités d'évolution dans le temps.

L'invention a donc pour objet un terminal de jeux comprenant des moyens d'analyse de bulletins de jeux et de reçus, des moyens de traitement des informations résultant de l'analyse des supports d'informations, de conversion de ces données en données numériques et de transmission de ces données à un système de traitement à distance ou local par l'intermédiaire d'un réseau de communication, des moyens de réception de données de validation de bulletins de jeux et/ou de reçus en provenance du système de traitement à distance ou local, des moyens d'affichage de données, un ensemble de clavier associé à des moyens électroniques de commande des différentes fonctions du terminal, caractérisé en ce que les moyens d'analyse des bulletins de jeux et de reçus sont constitués par un dispositif d'analyse de supports d'informations commun comprenant des moyens d'analyse des signes inscrits par les joueurs sur les bulletins et des moyens de lecture de codes à barres représentant les numéros de validation des reçus et en ce que ces moyens de traitement comportent des moyens de mémorisation à grande capacité, fractionnables et à consommation d'énergie de rétention nulle, d'une part des instructions de fonctionnement du terminal qui leur sont transmises à partir du système de traitement et d'autre part des données de jeu reçues par le terminal et en ce qu'il comporte en outre des moyens à clé à circuit intégré d'autorisation ou d'interdiction de l'accès au terminal.

Selon une caractéristique particulière de l'invention, les moyens de mémorisation sont constitués par au moins une mémoire EEPROM segmentée dite "flash".

Selon une autre caractéristique de l'invention, le terminal comporte en outre un dispositif de lecture de codes magnétiques et de codes optiques associé au dispositif d'analyse de supports d'informations.

Selon encore une autre caractéristique de l'invention, le terminal comporte en outre un lecteur de cartes à circuits intégrés associé au dispositif d'analyse de supports d'informations.

L'invention sera mieux comprise à l'aide de la description qui va suivre, donnée uniquement à titre d'exemple et faite en se référant aux dessins annexés, sur lesquels :
- la Fig.1 est une vue générale en perspective d'un terminal de jeu suivant l'invention;
- la Fig.2 est un schéma synoptique du terminal de jeu de la Fig.1;
- la Fig.3 est un schéma synoptique détaillé de l'ensemble de clavier du terminal de jeu suivant l'invention;
- les Fig.4 et 5 sont des schémas plus détaillés des dispositifs d'affichage du terminal;
- la Fig.6 est un schéma synoptique du dispositif de commande de l'alimentation du terminal de jeu;
- la Fig.7 est une vue schématique en perspective du dispositif d'analyse faisant partie du terminal;
- la Fig.8 est une vue schématique en coupe transversale du dispositif de la Fig.7;
- la Fig.9 montre un bulletin de jeu destiné à être traité par le dispositif;
- la Fig.10 montre les données du bulletin de jeu de la Fig.9 retenues par le dispositif de lecture;
- la Fig.11 montre un reçu émis par le terminal et analysé par le dispositif;
- la Fig.12 est une vue à plus grande échelle du code barre du reçu de la Fig.11 montrant le mode d'analyse dudit code;
- la Fig.13 est un organigramme illustrant le fonctionnement du dispositif d'analyse pour un bulletin de jeu;
- la Fig.14 est un organigramme illustrant le fonctionnement du dispositif d'analyse pour un reçu;
- la Fig.15 est une vue en perspective éclatée du dispositif d'analyse de supports d'informations;
- la Fig.16 est une vue en perspective éclatée d'un détail du dispositif de la Fig.15;
- la Fig.17 est une vue en coupe transversale du boîtier du dispositif d'analyse, dont certaines pièces ont été enlevées;
- la Fig.18 est une vue en coupe transversale du dispositif assemblé;
- la Fig.19 est une vue en coupe à plus grande échelle d'une variante du volet de guidage et de réception de documents;
- la Fig.20 est une vue schématique en coupe d'un premier mode de réalisation d'un lecteur magnéto-optique faisant partie du terminal suivant l'invention;
- la Fig.21 est un vue en coupe analogue à celle de la Fig.20 représentant une variante du lecteur magnéto-optique; et
- la Fig.22 est un organigramme d'un mode de détermination de la nature des signaux délivrés par le lecteur magnéto-optique.

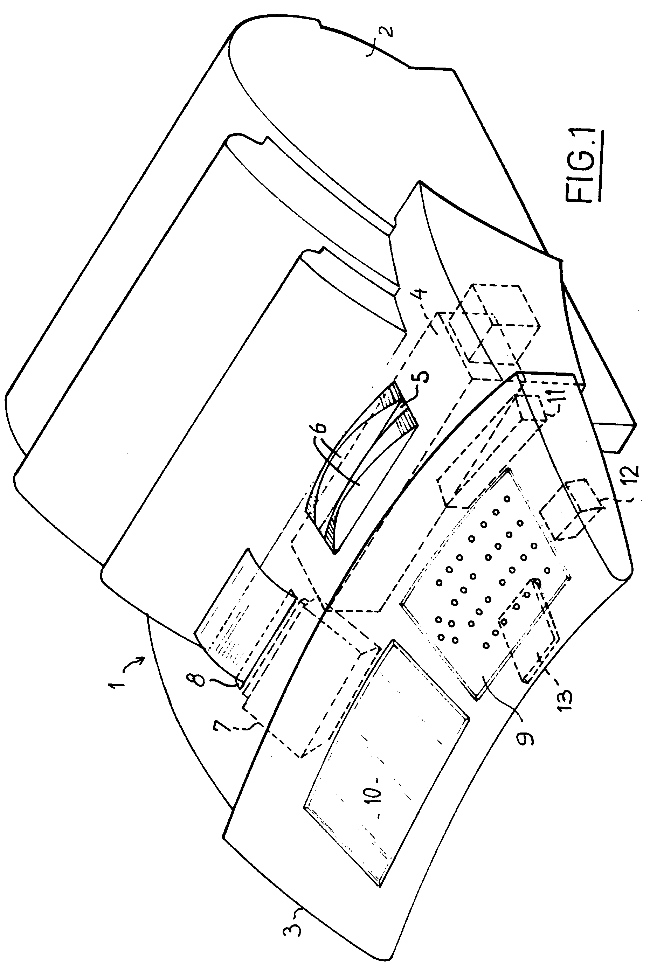

Sur la Fig.1, on a représenté en perspective une vue générale extérieure du terminal de jeu suivant l'invention.

Ce terminal désigné par la référence générale 1 comporte un boîtier arrière 2 dans lequel sont placés la plupart des circuits électroniques du terminal et un boîtier avant 3 contenant essentiellement les moyens d'actionnement et d'affichage du terminal. Le boîtier 2 contient un élément essentiel du terminal de l'invention à savoir un dispositif 4 d'analyse de supports de données.

Pour accéder au dispositif d'analyse 4, le boîtier comporte une fente 5 délimitée par des lèvres 6 venues de matière avec le boîtier 2.

A côté du dispositif d'analyse de supports de données 4, le boîtier 2 contient une imprimante 7 équipée d'un dispositif de coupe, telle qu'une imprimante thermique, au-dessus de laquelle est ménagée une fente 8 prévue dans le boîtier 2 pour permettre la sortie de documents imprimés.

Les divers composants du terminal contenus dans le boîtier 2 ainsi que ceux contenus dans le boîtier 3 sont représentés en pointillés.

Le boîtier 3 qui se trouve à l'avant du boîtier 2, comporte un clavier de commande 9 qui sera décrit plus en détail par la suite, un écran d'affichage 10 du type à cristaux liquides destiné à afficher des informations correspondant au déroulement d'opérations en cours de fonctionnement du terminal, un lecteur magnéto-optique 11 destiné à lire des supports portant soit des codes magnétiques, soit des codes optiques, un boîtier 12 à clé à circuit intégré destiné à contrôler l'accès au terminal d'une manière qui sera décrite par la suite et un lecteur 13 de cartes à circuit intégré, notamment de cartes de crédit d'argent ou de crédit de jeux.

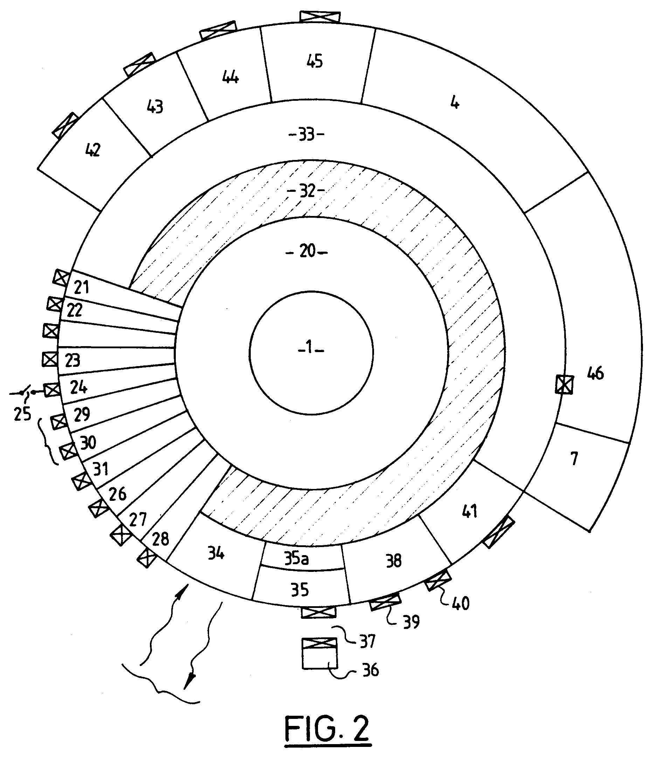

Sur la Fig.2, on a représenté un schéma synoptique du terminal de jeu suivant l'invention.

Ce schéma synoptique d'un type particulier doit être lu à partir du centre dans lequel est indiquée la fonction générale du dispositif décrit, vers la périphérie, par couches concentriques successives qui donnent progressivement des indications de plus en plus détaillées sur la structure du dispositif.

Le terminal 1 représenté schématiquement sur la Fig.2, comporte tout d'abord une carte 20 de microprocesseur standard du marché, telle qu'une carte 386 SX.

Cette carte 20 comporte deux circuits d'entrée sortie série 21,22, un circuit d'entrée sortie parallèle 22a, un circuit 23 de connexion à un écran graphique en couleur, un circuit 24 connecté à un commutateur 25 de sélection de la vitesse de fonctionnement du terminal, un circuit 26 de liaison avec le clavier 9, un circuit de sortie de haut-parleur 27 et un circuit logique de remise à zéro 28. Il comporte en outre des circuits 29,30 et 31 pouvant être utilisés pour la connexion d'un disque dur, d'une disquette et d'une carte de micro-ordinateur extérieure.

Les bornes de liaison de tous ces circuits avec les dispsoitifs périphériques précités sont matérialisées sur la figure par un carré barré par une croix.

Au microprocesseur 20 est en outre associé un bus 32 ISA de micro-ordinateur, destiné à relier le microprocesseur 20 à un certain nombre de circuits et notamment à un circuit ou carte auxiliaire 33 contenant une unité de traitement autonome, une mémoire et une logique de contrôle.

Le microprocesseur 20 est en outre relié par le bus 32 à un modem 34 de liaison avec un réseau de communication auquel est connecté le terminal, à une carte de mémoire EEPROM du type "flash" 35. Ce circuit intégré de mémoire est fabriqué et vendu par la société INTEL. Il est destiné à stocker d'une part les programmes de fonctionnement du terminal chargé dans celui-ci à partir du système central de traitement auquel il est relié par le réseau et d'autre part les données de jeux reçues par le terminal proprement dit.

A cette carte de mémoire "flash" 35 est associée une carte de mémoire "flash" 36 enfichable au moyen d'un connecteur 37 et destinée à contenir par exemple les données de jeu recueillies par le terminal pendant une période donnée. Cette carte de mémoire 36 peut être retirée du terminal pour être transportée jusqu'à un centre de traitement. Les mémoires de type "flash" ont pour caractéristiques essentielles d'être d'un accès extrêmement difficile, si l'on ne possède pas les moyens appropriés, de sorte que le transport dans une telle mémoire de données relatives à des jeux qui doivent rester secrètes avant le tirage est beaucoup plus sûr que le transport de données par exemple dans une mémoire du type disquette dont la lecture est extrêmement aisée à l'aide d'un micro-ordinateur ordinaire.

Le microprocesseur 20 est en outre connecté par le bus 32 à un circuit 38 de connexion à un réseau local ayant une connexion 39 à câble coaxial et une connexion 40 à paires torsadées.

Le microprocesseur 20 est de plus connecté par le bus 32 à un circuit d'interface 41 destiné à relier entre elles des unités de stockage de masse. Il s'agit d'un bus local parallèle, de type multi-média, par exemple SCSI. Le circuit d'interfce 41 permet la liaison au terminal d'un lecteur de CD-ROM multi-média.

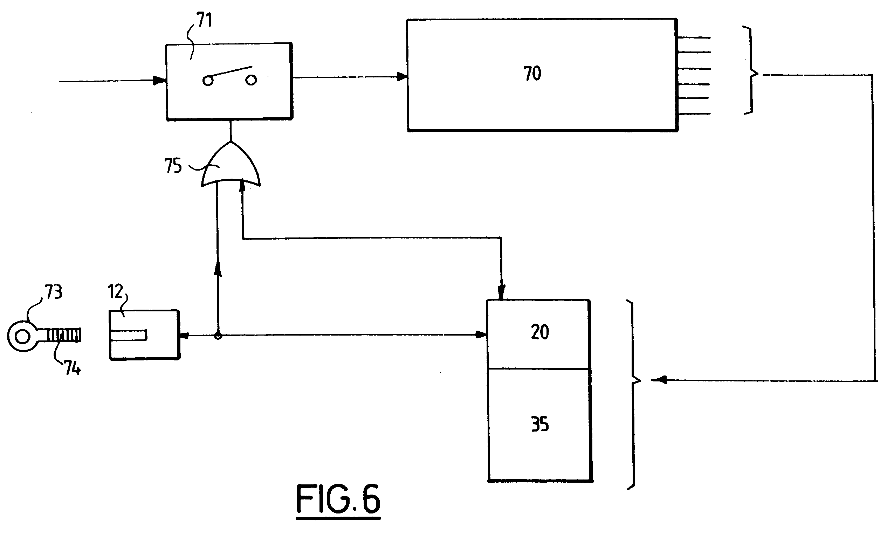

La carte auxiliaire 33 est reliée à deux circuits d'entrée/sortie série 42,43, à un circuit 44 de contrôle d'ouverture ou de fermeture de caisse enregistreuse, à un circuit 45 de contrôle de l'alimentation électrique du terminal, ce circuit 45 étant décrit plus en détail en référence à la Fig.6, au dispositif d'analyse de données 4 représenté à la Fig.1, à un circuit d'entrée/sortie 46 associé au clavier 9 et à un circuit de commande de l'imprimante thermique 7.

L'alimentation en courant électrique du terminal est assurée soit en 110 Volts, soit en 220 volts alternatifs de 40 à 80 Hz et délivre des tensions continues de diverses valeurs, de - 5 volts, + 5 volts, - 12 volts, + 12 volts et + 24 volts par exemple.

Ainsi qu'on le verra par la suite en référence à la Fig.6, l'ensemble des tensions continues à l'exception de la tension de 24 volts, sont commandées par le code de la clé codée que l'utilisateur du terminal doit posséder pour en provoquer la mise en marche.

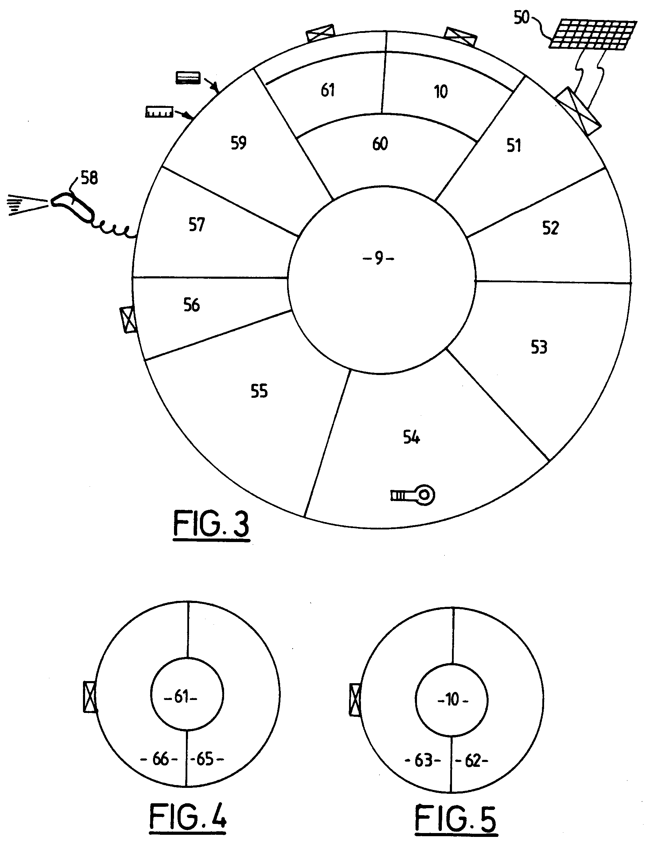

Sur la Fig.3, on a représenté plus en détail l'ensemble du clavier 9 commandé par le circuit d'entrée/sortie de clavier 36 de la Fig.2.

Cet ensemble de clavier comporte une matrice de touches 50 associée à un circuit de contrôle 51.

Il comporte par ailleurs un circuit de commande de haut-parleur 52, un circuit de commande 53 associé au lecteur de carte à circuit intégré ou carte à puce 13 (Fig.1), un circuit 54 associé à l'ensemble 12 à clé à circuit intégré ou clé à puce, un circuit 55 de commande de diodes électroluminescentes de signalisation (non représentées), un circuit d'interface 56 à 50 paires de connexion.

L'ensemble de clavier comporte de plus un circuit 57 de commande d'un lecteur optique ou magnétique 58 communément appelé "douchette" et relié par un câble souple à l'ensemble de clavier.

Il comporte également un circuit 59 de contrôle du lecteur magnéto-optique 11 (Fig.1) ainsi qu'un circuit 60 de commande d'une part de l'écran d'affichage à cristaux liquides du terminal destiné au détaillant et d'un dispositif d'affichage à cristaux liquides 61 destiné aux joueurs et relié au terminal par un câble flexible, placé de manière que les parieurs puissent voir le résultat de leur jeu lorsque leur reçu est vérifié dans le terminal après le tirage du jeu auquel ils ont participé.

Le dispositif d'affichage à cristaux liquides 10 destiné au détaillant représenté à la Fig.5, comporte une zone d'affichage 62 à cristaux liquides et un circuit d'interface série-parallèle 63.

De même, comme représenté à la Fig.4, le dispositif d'affichage à cristaux liquides destinés aux joueurs comporte une zone d'affichage 65 à cristaux liquides et un circuit d'interface série-parallèle 66, les deux dispositifs d'affichage 10 et 61 étant reliés au circuit de commande 60 par l'intermédiaire des circuits d'interface respectifs 63 et 66.

On va maintenant se référer à la Fig.6 sur laquelle on a représenté le circuit 45 de contrôle de l'alimentation du terminal selon l'invention.

On voit sur cette figure, le circuit d'alimentation 70 qui est lui-même alimenté à partir du réseau à 220 volts par l'intermédiaire d'un interrupteur 71 et qui est destiné à délivrer à sa sortie un certain nombre de tensions continues allant de - 5 volts à + 12 volts par exemple, ces diverses tensions d'alimentation étant appliquées à l'unité centrale de traitement du microprocesseur 20, à l'ensemble de mémoire et en particulier à la mémoire "flash" 35, à la carte auxiliaire 33 ainsi qu'à d'autres circuits du terminal.

Par ailleurs, l'unité centrale du microprocesseur 20 est connectée au circuit 12 de lecture de clé à circuit intégré d'une clé à puce 73 qui porte ainsi que son nom l'indique un circuit intégré 74 qui contient le code d'accès au terminal.

La sortie du circuit 12 de lecture de la clé 73 est en outre connectée à une entrée d'un circuit OU 75 alors que l'autre entrée du circuit OU est connectée à une sortie correspondante de l'unité centrale du microprocesseur 20. La sortie du circuit 75 est destinée à commander l'interrupteur 71 de transmission de la tension du réseau au circuit d'alimentation 70.

L'introduction de la clé 73 dans le lecteur 12 provoque tout d'abord l'apparition d'un signal de sortie appliqué d'une part à l'unité centrale 20 et d'autre part à l'entrée correspondante du circuit OU 75. Si le signal de sortie de lecteur 12 correspond au code exact d'accès au terminal, l'unité centrale 20 reconnaît ce code et transmet sur sa sortie connectée au circuit OU 75, un signal provoquant l'apparition à la sortie du circuit 75 d'un signal de commande de la fermeture de l'interrupteur 71 et par conséquent de la mise sous tension de l'alimentation 70. Si au contraire, le signal de sortie du lecteur 12 correspond à un code d'accès erroné, l'unité centrale 20 transmet sur sa sortie connectée à l'entrée correspondante du circuit 75, un signal assurant le blocage de ce circuit et par conséquent l'ouverture de l'interrupteur 71 et la coupure de la tension du réseau appliquée à l'alimentation 70.

Par conséquent, on voit que la mise sous tension du terminal est déjà conditionnée par la détection du code ou de l'algorithme exact d'accès au terminal inscrit dans le circuit intégré ou puce 74 de la clé 73.

Comme décrit plus haut en rérérence à la Fig.2, le circuit du terminal comporte une carte de microprocesseur 20 comprenant ses propres mémoires classiques, auxquelles est associée la mémoire flash 35 et la carte auxiliaire 33 dispose elle aussi d'une mémoire.

On va donc décrire ci-après le fonctionnement du dispositif en ce qui concerne le comportement de ses moyens de mémorisation.

Les moyens de mémorisation associés à l'unité centrale de traitement comprennent une DRAM, la mémoire "flash " 35 destinée à contenir les logiciels codés et comprimés des applications du terminal, une SRAM et une ROM destinées à contenir des paramètres fixes tels que des tests internes, un logiciel de transfert de base.

Selon l'invention, on souhaite éviter pour la mémoire flash 35, l'emploi d'un disque dur qui est cher, lent, volumineux et pas fiable.

On réalise donc la mémoire 35 sous forme de EEPROM segmentée à grande capacité et à consommation de rétention nulle à laquelle sont associés des moyens d'accès spécifiques 35a (Fig.2) permettant la mise en communication de la mémoire avec le reste du terminal, avec d'autres terminaux du réseau ou avec des unités de chargement/déchargement et de lecture/écriture de la mémoire flash.

En fonctionnement normal du terminal, après la mise sous tension, il y a test pour déterminer si les mémoires du terminal sont chargées ou vides.

Si les mémoires sont chargées, on configure une partie de la DRAM sous forme de disque virtuel, le reste étant configuré en mémoire de travail.

Les fichiers stockés dans la mémoire flash 35, dans la SRAM et dans la ROM sont décompressés, décodés et transférés soit au disque DRAM, soit en mémoire DRAM de l'unité du microprocesseur 20.

L'accès à la mémoire flash est conditionné par la reconnaissance par les moyens d'accès 35a du code d'accès contenu dans le circuit intégré 74 de la clé à puce 73.

L'application devant être réalisée est alors exécutée.

Au cours de l'application, certains paramètres sont momentanément transférés dans la SRAM, puis au cours de temps morts de l'application, on remet à jour la mémoire flash 35 avec les informations contenues dans la SRAM.

La structure segmentée de la mémoire flash 35 permet l'exécution de ces opérations dans un minimum de temps.

Si la mémoire flash 35 et les mémoires SRAM et DRAM sont vides, ce qui correspond à l'état vierge du terminal, lors de la mise sous tension, on vérifie qu'il n'y a pas de logiciel dans les mémoires précitées.

Le terminal lit le disque ROM et un logiciel de transfert de base contenu dans la ROM appelle le centre serveur ou est appelé par celui-ci qui télécharge dans la mémoire flash 35, les applications que doit exécuter le terminal.

Celui-ci est alors prêt à fonctionner en fonctionnement normal.

La carte flash 36 connectée à la mémoire flash 35 par le connecteur 37 comme représenté schématiquement à la Fig.2, fait elle aussi partie du schéma de fonctionnement qui vient d'être décrit.

Elle peut en outre être retirée du terminal et transportée vers un centre de traitement éloigné sans que l'on puisse accéder à son contenu.

Cette propriété est très intéressante pour des terminaux qui ne fonctionnent pas en réseau interconnecté mais dont les données de jeu seraient relevées à l'aide précisément d'une mémoire amovible et transportées vers un centre de traitement en vue d'y être traitées.

En revenant maintenant à la Fig.2, il convient de préciser que dans le présent mode de réalisation, le dispositif d'analyse de supports de données 6 est avantageusement du type décrit dans les documents de brevet français FR-A-2 695 500 et FR-A-2 695 744 qui ont été déposés par la Demanderesse et publiés après la date de depôt.

Il s'agit d'un dispositif comprenant des moyens d'introduction d'un support d'informations, des moyens de lecture des informations se trouvant sur le support, des moyens de traitement d'informations lues sur le support en vue de leur conversion en données numériques et de leur transmission vers l'unité centrale de gestion de jeux. Les moyens de lecture des informations se trouvant sur le support lorque celui-ci est un bulletin de jeu, comprennent un lecteur optique aveugle à au moins une couleur dans laquelle des informations fixes sont imprimées sur le support et sensible à d'autres couleurs afin de ne prendre en compte que les informations variables de jeu et les informations fixes de cadrage du support et de destination du type de jeu auquel il appartient, imprimées dans ces autres couleurs.

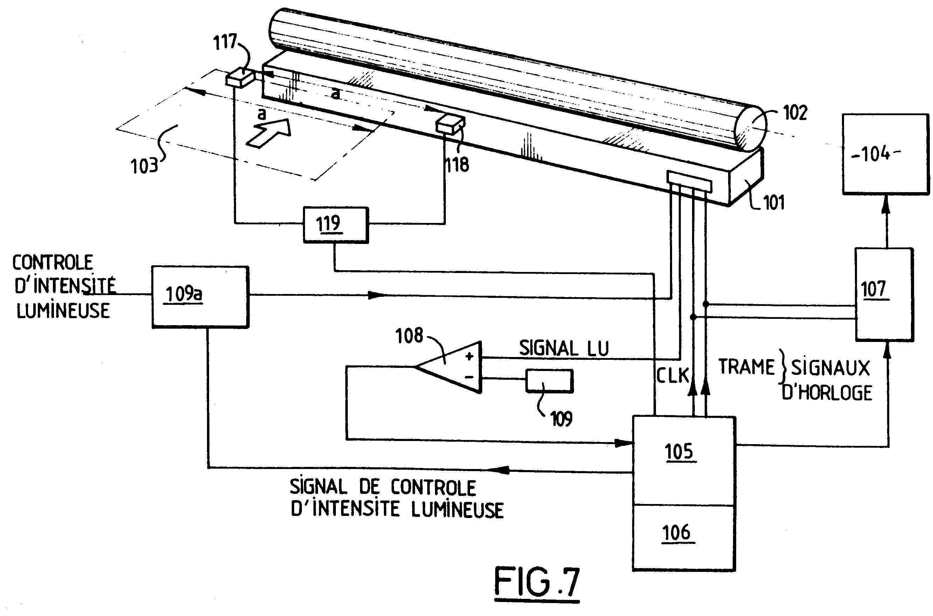

Le dispositif d'analyse représenté schématiquement à la Fig.7 comporte principalement un détecteur d'image 101 disposé en regard d'un rouleau 102 d'entraînement d'un document 103 à analyser.

Le rouleau 102 est relié à un moteur électrique pas à pas 104 destiné à permettre l'analyse du document 103 par lignes de balayage successives avec une résolution verticale qui est fonction du pas adopté pour le déplacement du rouleau 102.

Au détecteur d'images 101 est connecté un dispositif 105 de traitement de données qui comporte une mémoire 106 de stockage temporaire des données numériques d'image, avant leur transmission à une unité centrale de gestion de jeux (non représentée).

Le dispositif de la Fig.7 comporte en outre un circuit logique 107 de commande du moteur électrique pas à pas 104 et un comparateur 108 connecté entre la sortie de données du détecteur d'images 101 et l'entrée de l'unité de traitement et destiné à comparer le signal de sortie du détecteur avec un signal de référence délivré par une source de signaux 109, ainsi qu'un circuit 109a de contrôle d'intensité lumineuse qui reçoit un signal de contrôle d'intensité lumineuse provenant de l'unité de traitement 105.

Ainsi, l'unité de traitement 105 pourra par comparaison, déterminer une intensité correcte de la source lumineuse, appropriée au traitement en cours.

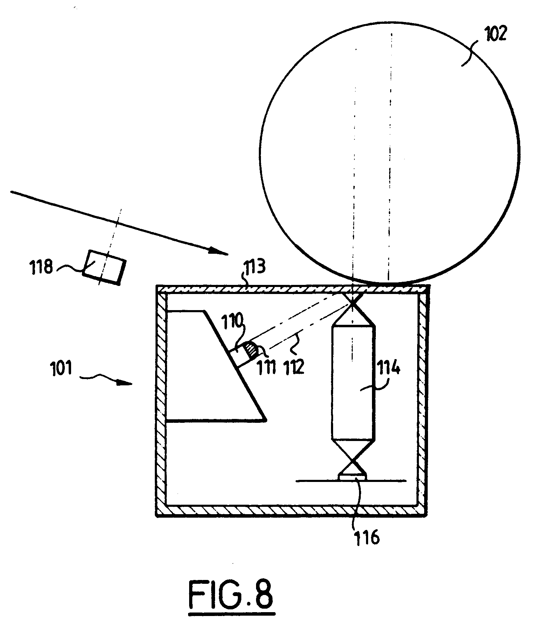

Comme représenté à la Fig.8, le détecteur 102 d'image 101 comporte une rangée de diodes électroluminescentes 110 dont le nombre est fonction de la résolution horizontale et de l'intensité lumineuse requises.

A ces diodes 110 sont associés des organes 111 de focalistion et de filtrage de la lumière destinés à focaliser les faisceaux 112 sur une paroi transparente 113 du boîtier du détecteur contre laquelle doit être appliquée la face du document à analyser qui porte d'une part des inscriptions fixes telles qu'une grille de jeu, des numéros de cases de la grille, des indications de date et autres, imprimés dans la couleur de la lumière émise et qui ne seront donc pas reproduites par le dispositif et d'autre part des inscriptions variables portées par le joueur dans la grille de jeu dans une couleur différente de celle de la lumière émise, ainsi que des inscriptions fixes telles que des repéres de cadrage, un code relatif au type de jeu auquel appartient le bulletin imprimé dans une couleur différente de celle de la lumière émise et qui seront reproduites.

En regard de la zone de focalisation des faisceaux émis par les diodes électroluminescentes 110, sont disposés des conducteurs de lumière 114 de transmission des faisceaux vers des éléments photo-sensibles 116.

Le plan de symétrie du rouleau 102 et l'axe optique des conducteurs de lumière 114 présentent un léger décalage dans le sens de l'introduction d'un document pour permettre au bord avant de ce document de réfléchir la lumière émise par la source de lumière monochromatique traduisant ainsi la présence du document à cet emplacement.

De manière avantageuse, les organes 111 de focalisation et de filtrage des faisceaux émis par les diodes électroluminescentes 110 sont réalisés sous la forme de lentilles plan-concaves épaisses dont la face concave présente une courbure telle que le faisceau sortant d'une lentille chevauche le faisceau sortant d'une lentille voisine.

Ainsi, la lumière émise par l'ensemble des diodes électroluminescente à l'aspect d'un trait lumineux continu monochromatique de couleur rouge par exemple.

Ainsi, toutes les parties d'un bulletin imprimées en rouge n'apparaissent pas sur l'image du bulletin donnée par le dispositif, alors que les parties imprimées ou portant des marques d'autres couleurs apparaissent.

Le dispositif comporte en outre des détecteurs 117,118 disposés en regard de la fente entre le rouleau 102 et le détecteur d'image 101, à une distance axiale l'un de l'autre légèrement supérieure à la dimension transversale a du plus petit document à lire.

Les sorties des détecteurs 117,118 sont connectées à l'unité de traitement.

Un tel agencement permet de distinguer entre un document de faible largeur tel qu'un reçu qui provoque l'actionnement d'un seul détecteur, et un document de plus grande largeur tel qu'un bulletin de jeu qui déclenche deux détecteurs et de provoquer dans l'unité de traitement 105, l'intervention d'un programme approprié au traitement du document correspondant.

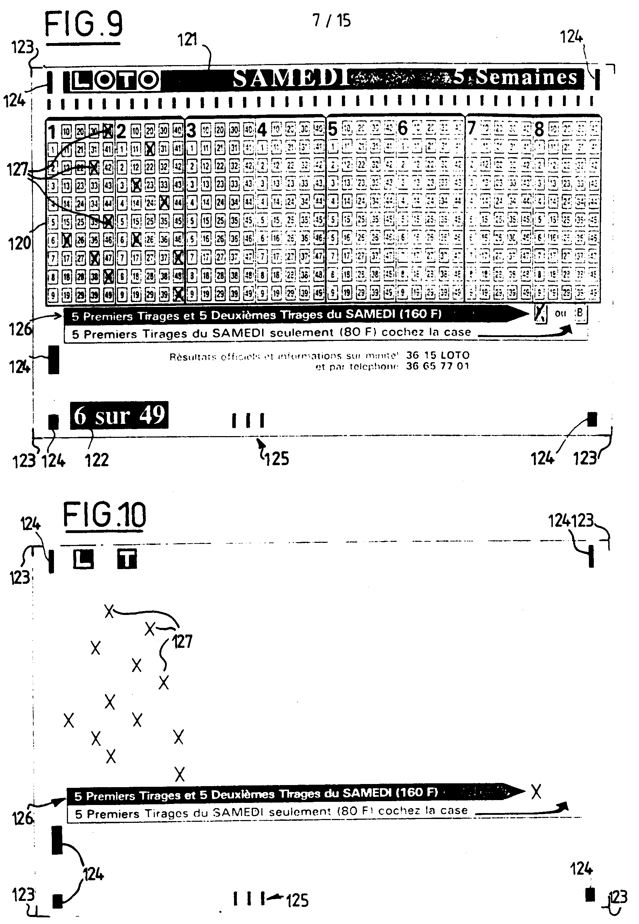

On a représenté sur la Fig.9, un bulletin de jeu de loto qui comporte une grille de jeu 120 contenant des numéros imprimés dans la couleur d'émission des sources lumineuses du détecteur, c'est à dire en rouge dans le present exemple.

Ce bulletin porte en outre imprimée en rouge, une plage supérieure 121 indiquant le jour et la durée de validité du bulletin et à gauche de cette plage, le mot "LOTO" est imprimé sur fond bleu pour les lettres L et T et sur fond rouge pour les lettres O.

Le billet comporte de plus une plage inférieure 122 à fond rouge sur laquelle apparaît en blanc l'inscription "6 sur 49" indiquant le nombre de numéros à cocher.

Les autres plages du bulletin sont imprimées dans des couleurs permettant leur détection par le dispositif de lecture.

Il s'agit des zones 123,124 de cadrage du bulletin, d'une zone 125 d'identification du type de jeu auquel appartient le bulletin et d'inscriptions 126 indiquant par exemple le nombre de tirages et le prix correspondant à payer.

Enfin, des marques en forme de croix 127 ont été portées par un joueur sur le bulletin et constituent les données variables de celui-ci.

Sur la Fig.10, on a représenté l'image du bulletin de la Fig.9 qui résulte de l'analyse par le dispositif suivant l'invention et qui apparaît sur les moyens d'affichage associés à celui-ci.

On voit que toutes les zones imprimées sur le bulletin dans la couleur à laquelle le dispositif a été rendu aveugle, ont disparu de l'image du bulletin et que seules subsistent les données variables constituées par les croix 127 portées par le joueur et les données fixes imprimées dans d'autres couleurs que le rouge telles que les repères de cadrage 123,124, et le code 125 désignant le type de jeu ainsi que certaines inscription telles que 126.

Ainsi qu'on le verra par la suite, l'image du bulletin de la Fig.10 sera complétée par superposition aux informations de la Fig.10 de l'image, d'une grille d'analyse de jeu identique à la grille 120 du bulletin de la Fig.9.

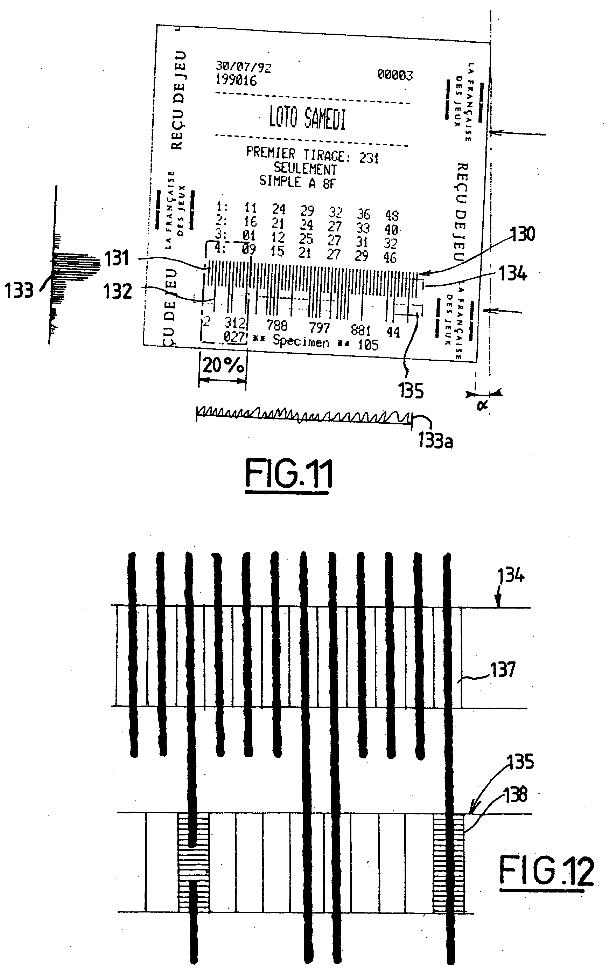

Sur la Fig.11, on a représenté l'image d'un reçu de jeu délivré par le terminal de jeu au joueur et dont le dispositif d'analyse suivant l'invention assure également la lecture.

Le reçu comporte également un certain nombre de zones destinées à être analysées et en particulier une zone 130 contenant un code à barres de validation du bulletin présenté par un joueur.

Il s'agit d'un code qui doit être identifié et comparé à un code correspondant stocké dans l'unité centrale.

Ce code qui est quelquefois imprimé avec des défauts d'impression, doit être reconnu par le dispositif suivant l'invention avec un maximum de précision.

Il est constitué d'une première partie 131 formée de barres disposées à intervalles réguliers et qui matérialisent des signaux d'horloge et d'une seconde partie 132 formées de barres définissant des signaux de données correspondant au code de validation proprement dit.

A gauche du reçu ainsi constitué est représenté un histogramme 133 du code à barres généré par le dispotif d'analyse destiné au calcul de la séparation des signaux d'horloge et des signaux de donnés.

Au-dessous du bord inférieur du reçu est représenté un histogramme horizontal 133a destiné au calcul de l'angle d'inclinaison α du reçu.

L'analyse du reçu est assurée par exploration de deux secteurs rectangulaires 134,135 définis dans les parties 131 et 132 du code à barres.

Les positions des secteurs 134 et 135 sont choisies de chaque côté de la ligne de séparation des signaux d'horloge et des signaux de données.

Comme représenté à la Fig.12, dans le secteur 134 de la partie 131 du code à barres matérialisant les signaux d'horloge, on définit des fenêtres adjacentes 137 entourant chacune une portion de barre.

Ensuite, dans le secteur 135 de la partie 132 du code à barres correspondant aux signaux de données, on définit des fenêtres 138 entourant chacune l'emplacement éventuel d'une portion de barre et on détermine par exploration ligne par ligne la présence ou l'absence d'une barre dans chaque fenêtre 138.

Cette exploration tient compte des défauts d'impression, car il est admis par convention que la détection de par exemple 60% des points sur la totalité des points formant une barre, confirme la présence d'une barre et entraîne sa prise en compte pour l'analyse du code.

On procède ensuite au comptage des signaux de données en effectuant une opération logique ET entre une barre d'horloge et une barre de données se trouvant éventuellement en regard de cette barre d'horloge.

La présence simultanée d'une barre d'horloge et d'une barre de données engendre l'émission d'un 1 logique, tandis que la présence d'une barre d'horloge et l'absence d'une barre de données engendre l'émission d'un O logique.

On voit donc qu'ainsi on arrive à reconstituer avec une grande précision, le numéro de validation porté par le reçu.

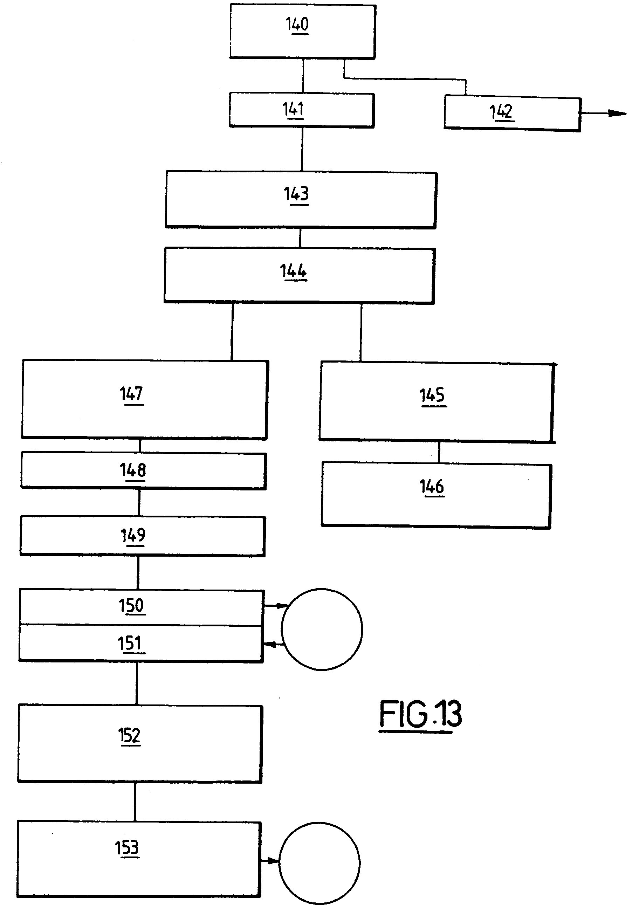

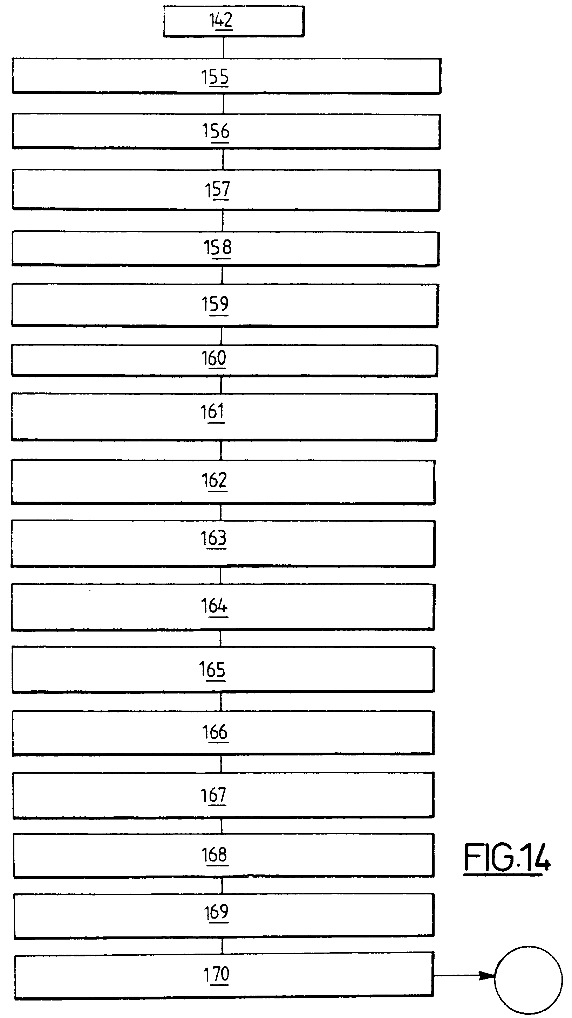

Le déroulement d'une opération d'analyse à l'aide du dispositif suivant l'invention va maintenant être décrit en référence aux organigrammes des Fig.13 et 14.

L'opération d'exploration est déclenchée par la présentation d'un document au dispositif d'analyse par introduction entre le rouleau 102 et le détecteur d'image 101.

Comme représenté à la Fig.8, le plan de symétrie du rouleau 102 perpendiculaire à la face transparente 113 du détecteur est décalé par rapport à l'axe optique de l'ensemble de conducteurs de lumière 114 pour que le bord d'un document engagé entre le rouleau 102 et le détecteur de lumière 101 puisse se trouver au-delà de cet axe optique et que le document réfléchisse la lumière provenant des diodes électroluminescentes 110 dès sa mise en place.

Le parallèlisme entre le bord du document et la lignes de diodes électroluminescentes est vérifié en prévoyant qu'un nombre minimum d'éléments photosensibles 116 doivent recevoir de la lumière réfléchie par le bord du document pour admettre que sa position par rapport à la ligne de diodes est correcte, c'est à dire que son défaut de parallélisme vis à vis de la ligne de diodes est tolérable.

On peut également vérifier ce parallélisme en déterminant une distance minimale entre deux éléments photosensibles éclairés. Quand cette distance minimale ou le nombre minimal d'éléments photosensibles est atteint, le dispositif de traitement actionne le moteur pas-à-pas d'entraînement du rouleau 102 et la lecture ligne par ligne du document peut être effectuée. La distance minimale entre deux élément ou le nombre minimal d'éléments électroluminescents éclairés sont différents selon la dimension transversale du document à analyser.

La mise en place d'un document sur le dispositif d'analyse est effectuée à la phase 140.

Au cours des phases 141 et 142, il y a détermination au moyen des détecteurs 117,118, si le document est un bulletin ou un reçu.

Si le document est un reçu, son traitement sera examiné en référence à la Fig.14.

Si le document est un bulletin de jeu, au cours de la phase 143 on recherche les bords du bulletin matérialisés par huit repères 123 représentés aux Fig.9 et 10 en vue du cadrage approximatif du bulletin.

A partir du cadrage réalisé, on procède à la recherche de marques 124 de cadrage précis du bulletin et qui sont représentées aux Fig.9 et 10 par des pavés.

Cette recherche est assurée à la phase 144. Si le bulletin ne comporte pas de marques de cadrage précis, on établit au cours de la phase 145, que le bulletin examiné est un bulletin du type ancien qui nécessite au cours d'une procédure matérialisée globalement par une phase 146, une recherche spécifique correspondant à chaque bulletin.

Si le bulletin comporte des marques 124, on établit au cours de la phase 147 qu'il s'agit d'un bulletin pouvant être traité par le dispositif.

Au cours de la phase 148, on établit l'inclinaison du bulletin par rapport à la génératrice du rouleau 102 et le système de traitement compense cette inclinaison.

Au cours de la phase ultérieure 149, on recherche sur le bulletin, le code relatif au type de jeu auquel il appartient et qui est représenté en 125 aux Fig.9 et 10.

Au cours de la phase 150, on procède à l'envoi du code relatif au type de jeu à un dispositif à mémoire de stockage des diverses informations relatives aux grilles de jeu, qui au cours de la phase 151 renvoie en retour une table de zones.

Au cours de la phase 152, on procède à la recherche des croix dans les zones du billet où elles ont été placées.

Au cours de la phase 153, il y a renvoi à l'unité centrale, des informations relatives à la table et aux croix placées par le joueur sur le billet et matérialisées par leurs coordonnées. L'enregistrement des données relatives à un bulletin est alors achevé.

Le traitement d'un reçu va maintenant être décrit en référence à l'organigramme de la Fig.14.

Après avoir établi au cours de la phase 142 évoquée à l'occasion de la description de la Fig.13 que le document introduit dans le dispositif d'analyse est un reçu, on recherche au cours de la phase 155, les bords droits de ce reçu.

Puis au cours de la phase 156, on calcule l'inclinaison du reçu et au cours de la phase 157, on procéde à la recherche de la zone 130 contenant le code à barres qui est représenté à la Fig.11.

Au cours de la phase 158, on procéde au rattrapage de l'inclinaison calculée au cours de la phase 156.

Au cours de la phase 159, on établit un histogramme horizontal d'une zone d'environ 20% de la zone 130 contenant le code à barres suivi d'un filtrage et d'un lissage numériques effectués au cours de la phase 160.

Au cours de la phase 161, on recherche le front descendant dans la plus grande surface de la courbe de l'histogramme 133 (Fig.11).

Au cours de la phase 162, on se cale sur le plus grand front descendant correspondant au centre du code barre.

Au cours de la phase 163, on détermine les zones adjacentes 131,132 (Fig.11) représentatives des signaux d'horloge de données respectivement.

Au cours de la phase 164, on établit l'histogramme sur les codes dans la zone des signaux d'horloge 131.

Au cours de la phase 165, on procède au lissage et à l'extraction des bits d'horloge ainsi qu'à une remise à l'échelle par établissement de moyenne.

Au cours de la phase 166, on détermine si le nombre de signaux d'horloge est correct. Dans la négative, le reçu est considéré comme étant illisible et est rejeté. Dans l'affirmative, on passe à la phase 167 dans laquelle, à partir des signaux d'horloge, on détermine les zones d'échantillonnage des donnée ou fenêtres 137 par déphasage d'une demi-période des signaux d'horloge.

Au cours de la phase 168, on recherche les données dans chaque zone ou fenêtre 138 correspondant à la fenêtre 137, en procédant à une discrimination par seuil et en considérant comme valables les données représentées par une fraction déterminée de nombre total de points, de deux tiers par exemple.

Au cours de la phase 169, on procède à la remise en forme quatre bits par quatre bits des signaux d'horloge, qui sont au nombre de 60 par exemple, c'est à dire quinze fois quatre bits.

Au cours de la phase 170, on calcule la valeur binaire correspondante que l'on transmet à l'unité centrale.

L'examen du numéro de validation du reçu est ainsi achevé.

Le fonctionnement de l'ensemble du dispositif suivant l'invention va maintenant être précisé en référence aux Fig.7 et 8.

Lorsque les détecteurs 117,118 détectent la présence d'un document à l'entrée du dispositif, l'information est transmise à l'unité de traitement 105 qui contrôle le dispositif analyseur et le moteur pas à pas 104. L'unité de traitement active alors les diodes électroluminescentes 110 (Fig.8) du dispositif d'analyse et celui-ci commence à balayer une ligne.

Quand le document est parallèle à la source lumineuse selon l'agencement indiqué plus haut, l'unité centrale 105 commande le moteur pas à pas 104 de façon qu'une ligne soit analysée après chaque avance d'un pas.

Ensuite, l'unité centrale 105 utilise les signaux délivrés par le système de détection d'entrée du dispositif analyseur constitué par le détecteur 117 et 118 et le circuit 119 pour déterminer si il reste encore une partie du document à analyser.

Dès que le système de détection ne voit plus de document à l'entrée, il transmet l'information d'absence de document à l'unté centrale 105 qui calcule la différence de position entre la ligne en cours d'analyse par le dispositif analyseur, et le bord arrière du document pour établir le nombre de pas que le moteur 104 doit effectuer pour que l'analyse du document puisse se terminer jusqu'au bout.

L'image est analysée ligne par ligne avec par exemple une résolution de 40 pas par cm et chaque ligne possède une résolution de 80 pas par cm.

La résolution verticale peut être modifiée par modification du rapport de transmission entre l'arbre de sortie du moteur pas à pas 104 et le rouleau 102 d'entraînement des documents.

La résolution verticale dépend de la construction du détecteur d'images 101.

Au cours des opérations d'exploration d'un document, les données analysées ligne par ligne par le dispositif, sont transmises par l'unité de traitement à la mémoire 106 de stockage de données en vue de leur transmission ultérieure vers l'unité centrale à laquelle est associé le dispositif suivant l'invention.

Dans l'exemple qui vient d'être décrit, la source lumineuse du lecteur d'image est formée d'une série de diodes possédant des éléments de couleur rouge d'une longueur d'onde de 650 à 670 nanomètres.

On peut également envisager d'associer à une première série de diodes électroluminescentes des éléments de filtrage d'une première couleur et d'associer à au moins une autre série de diodes électroluminescentes, des éléments de filtrage d'au moins une autre couleur et de rendre ainsi le lecteur aveugle à deux couleurs ou plus.

On peut également envisager de substituer aux diodes électroluminescentes un tube à décharge émettant directement une lumière monochromatique ou bien associé à un élément de filtrage approprié.

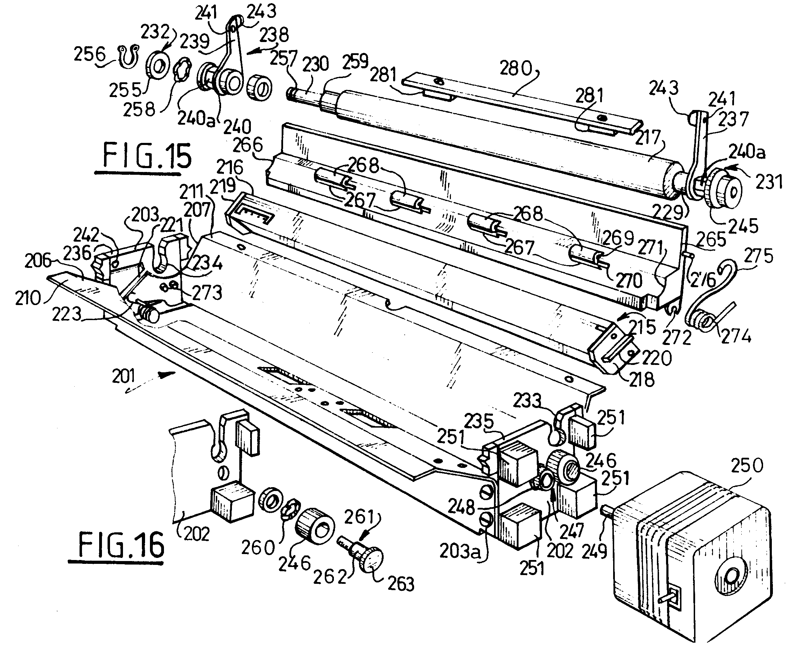

Le dispositif d'analyse de supports d'informations ou documents représenté à la Fig.15, comporte un boîtier 201 en forme de canal de section générale en U à bords évasés, réalisé en tôle métallique et fermé à ses extrémités par des flasques 202 et 203 en matière plastique par exemple fixés au boîtier 201 par exemple par des vis 203a.

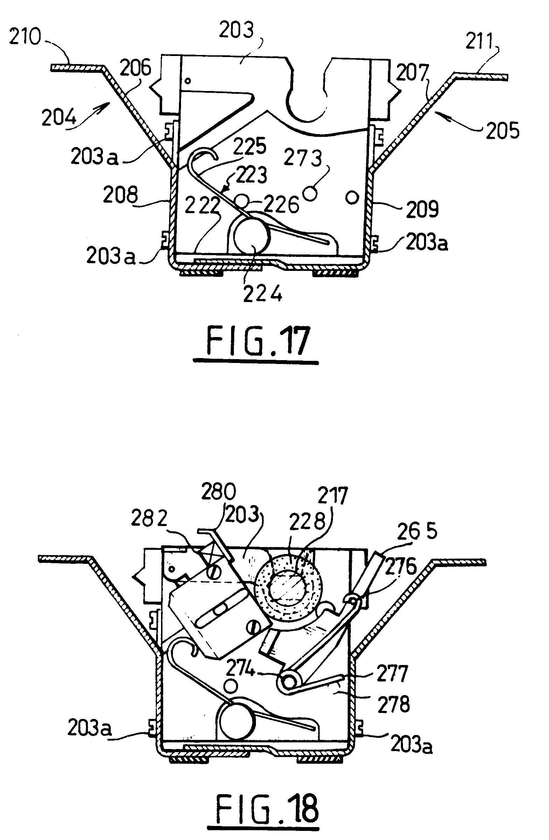

Les bords évasés 204 et 205 du boîtier 201 comportent ainsi qu'on le voit clairement à la Fig.17, des portions inclinées 206,207 prolongeant chacune une aile verticale 208,209 du boîtier et des rebords horizontaux 210,211.

Cette forme évasée du boîtier 201 facilite le montage du dispositif dans un ensemble plus important tel que par exemple un terminal de jeu ou autre.

Dans le boîtier ainsi constitué, est disposé un détecteur d'images 215 de forme parallélépipédique allongée s'étendant sur toute la longueur du boîtier et constitué d'une source de lumière linéaire (non représentée), des moyens de focalisation de la lumière émise par la source sur une paroi transparente 216 située en regard d'un rouleau 217 d'entraînement de documents et des éléments photo-sensibles (non représentés) de détection des faisceaux lumineux provenant de la source linéaire lorsqu'ils sont réfléchis par un document placé entre la paroi transparente 216 et le rouleau 217.

Le détecteur d'images 215 comporte à ses extrémités des plaques de montage 218,219 qui, comme on le voit sur la plaque 218, comportent chacune une saillie 220, coopérant avec une rainure inclinée ménagée dans chacune des flasques d'extrémité 202,203 du boîtier et dont seule la rainure 221 du flasque 203 est visible, pour permettre le montage du détecteur d'images 215 dans le boîtier 201.

Ainsi qu'on le voit bien à la Fig.17, à la partie inférieure de chaque flasque 202,203 d'extrémité du boîtier, à proximité du fond 222 est fixé un ressort en épingle 223 monté sur un ergot 224 solidaire du flasque 203 correspondant et comportant une branche 225 recourbée maintenue en butée contre un pion 226 et destiné à venir en contact avec un bord de la plaque 219 correspondante de montage du détecteur d'images 215 pour assurer ainsi une suspension ou un montage flottant du détecteur 215 dans le boîtier 201.

Le détecteur d'images 215 est maintenu en place dans le boîtier par le rouleau d'entraînement 217, dont la périphérie est revêtue, comme connu en soi d'une couche de caoutchouc cellulaire 228 ou analogue.

A chacune de ses extrémités, le rouleau 217 comporte des axes 229,230 pourvus de paliers correspondants 231,232 destinés à être reçus dans des encoches respectives 233,234 ménagées dans les bords supérieurs 235,236 des flasques 202 et 203 d'extrémité du boîtier 201.

Les paliers 231,232 sont pourvus chacun d'un verrou 237,238 d'immobilisation du rouleau 217 par rapport au boîtier 201.

Ces verrous sont identiques, de sorte que seul le plus visible sur le dessin, à savoir le verrou 238 va être décrit.

Il comporte une tige 239 solidaire d'un moyeu 240 formant l'une des pièces du palier correspondant et pourvu de méplats 240a d'engagement des paliers dans les encoches correspondants 233,234 des flasques 202,203 lorsque les verrous sont en position de déverrouillage.

A l'extrémité de la tige 239 opposée au moyeu est prévu un trou 241 qui coopère avec un téton de blocage 242 prévu sur le flasque d'extrémité correspondant du boîtier 201.

Le verrouillage est assuré, après mise en place des extrémités du rouleau 217 dans les encoches 233,234 correspondantes du boîtier 201 par rotation des verrous 237,238 et engagement des tétons de blocage tels que le téton 242 dans les trous correspondants tels que le trou 241 des verrous.

L'élasticité des verrous 237,238 permet une légère déformation de ceux-ci vers l'intérieur du boîtier pour permettre leurs engagements sur les tétons de blocage 242.

Une languette 243 prévue à l'extrémité de chaque verrou permet de faciliter sa manoeuvre de déblocage en vue du dégagement du rouleau 217.

Comme représenté à la Fig.18, lorsque le rouleau 217 est en place dans le boîtier 201, il prend appui contre la face transparente 216 du détecteur d'image 215 et provoque la mise sous tension des ressorts de suspension du détecteur d'image qui appliquent ainsi en permanence le détecteur 215 contre le rouleau 217 grâce au montage coulissant du détecteur 215 dans les rainures de guidage inclinées 221 du boîtier.

On obtient ainsi un contact permanent entre le détecteur et le rouleau, que ce soit en présence d'un document à analyser interposé entre ces deux éléments ou à vide.

L'axe d'extrémité 229 du rouleau 217 porte un pignon 245 d'entraînement en rotation du rouleau qui engrène avec le pignon de sortie 246 d'un réducteur 247 à deux pignons 246 et 248 montés à rotation sur des axes fixés aux flasques 202 du boîtier 201. Le pignon d'entrée 248 du réducteur est calé sur l'arbre de sortie 249 d'un moteur électrique pas à pas 250 d'entraînement du rouleau fixé aux flasques 202 par l'intermédiaire d'entretoises 251 venues de matière qui ménagent entre elles un espace suffisant pour loger des pignons du réducteur 247.

Le palier 232 monté à l'extrémité au rouleau 217 opposé au pignon d'entraînement 245, comporte interposé entre la pièce 240 formant moyeu pour le verrou 238 et une rondelle 255 prenant appui sur un circlips 256 engagé dans une rainure d'extrémité 257 de l'axe 230 du rouleau 217, une rondelle ondulée 258 dont l'élasticité assure un montage serré du palier 232 contre un épaulement correspondant 259 de l'axe 230 du rouleau, le palier 232 formant ainsi un frein destiné à amortir les vibrations dues à l'entraînement pas à pas du rouleau 217 transmises au rouleau 217 par le pignon d'entraînement 245 de celui-ci.

D'une manière analogue, ainsi qu'on l'a représenté à la Fig.16, le pignon de sortie 246 du réducteur 247 est également monté sur son axe par l'intermédiaire d'une rondelle ondulée 260, l'axe du pignon 246 étant constitué par une tige filetée 261 comportant une partie lisse 262 de réception du pignon 246 et une tête 263 de retenue axiale de ce pignon.

Lorsque la tige filetée 261 est vissée dans un trou taraudé correspondant ménagé dans le flasque 202 du boîtier 201, la rondelle ondulée 260 est comprimée et assure le freinage en rotation du pignon 246 et ainsi l'amortissement des vibrations qui lui sont transmises par le moteur pas à pas 250.

Dans le boîtier est en outre disposé un volet oscillant 265 de réception des documents après leur lecture par le dispositif. Le volet oscillant 265 présente un profil à peu près en forme d'équerre et s'étend lui aussi sur toute la longueur du boîtier entre les flasques 202 et 203 de celui-ci. Il comporte une surépaisseur longitudinale 266 dans laquelle sont ménagés des logements 267 de réception de galets 268 montés à rotation sur des axes 269 engagés de façon amovible par encliquetage dans des fentes 270 prévues de part et d'autre des logements 267. Les galets 268 sont au nombre de quatre et sont régulièrement répartis sur la longueur du volet oscillant 265.

La surépaisseur longitudinale 266 du volet oscillant 265 présente une face concave 271 en forme de portion de cylindre coaxiale au rouleau 217 pour favoriser le passage des documents.

Le volet 265 est monté oscillant sur les flasques d'extrémité 202 et 203 du boîtier 201, par l'intermédiaire de fourches 272 qui coopèrent chacune avec un axe 273 que l'on aperçoit sur le flasque 203, tourné vers l'intérieur du boitier 201. Le volet 265 est maintenu en position par des ressorts en épingle 274 dont une branche 275 est recourbée et accrochée sur un ergot 276 prévu sur le bord d'extrémité du volet et dont l'extrémité opposée 277 est droite et vient en butée avec un pion tel que 278 disposé à côté de l'axe 273 sur le flasque 203 du boîtier 201.

Ainsi les ressorts 274 assurent l'application permanente des galets 268 contre le rouleau 217.

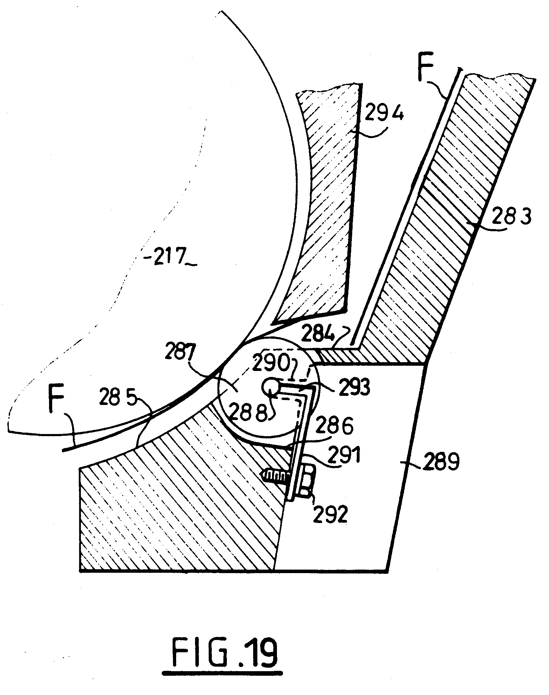

Les galets 268 ont pour rôle d'une part d'accompagner les documents entraînés par le rouleau 217, jusqu'au bord arrière du document et d'autre part, lorsqu'un document est libéré par le rouleau 217, de le ramener contre le volet en coopération avce une butée qui sera décrite en référence à la Fig.19.

Bien entendu, les éléments correspondants sont prévus sur le flasque 202 pour assurer le montage oscillant du volent 265 à ses deux extrémités.

Ainsi qu'on peut le voir à la Fig.18, le dispositif est complété par un guide 280 fixé par des entretoises 281 (Fig.15) dans le boîtier 201 et qui est destiné à faciliter l'introduction des documents entre le rouleau 217 et le détecteur d'images 215.

Des capteurs 282, par exemple des capteurs à infrarouges sont en outre disposés le long du guide 280 pour détecter la présence d'un document à l'entrée du dispositif.

De façon avantageuse, ces capteurs sont au nombre de deux et leur distance est prévue de manière à permettre de déterminer la nature du document présenté au dispositif selon la largeur de ce document.

Un tel agencement est décrit dans le document de brevet français FR-A-2 695 500 publié après la date de depôt et intitulée " Dispositif d'analyse de supports d'informations, notamment de bulletins de jeu ".

Au lieu d'être monté oscillant, le volet de guidage et de réception des supports d'informations peut être monté fixe dans le boîtier du dispositif et les galets qu'il porte peuvent être appliqués, contre le rouleau 217 par des organes élastiques.

Une telle variante est représentée à la Fig.19.

Selon cette variante, le volet de guidage 283 fixé dans le boitier (non représenté) du dispositif comporte comme le volet oscillant 265 de la Fig.15, une surépaisseur 284 ayant une face concave 285 en forme de portion de cylindre et dans cette surépaisseur des logements 286 pour des galets 287 dont le rôle est le même que celui des galets 268.

Les galets 287 sont montés chacun sur un axe 288.

Dans la face du volet 283 opposée à la surépaisseur 284 sont ménagés des évidements 289 prévus aux emplacements des galets 287 et débouchant dans les logements 286 correspndants.

Un axe 288 d'un galet 287 est engagé dans des gorges 290 creusées dans la paroi de fond de chaque évidement 289 de part et d'autre du logement 286 et appliqué au fond desdites gorges par un ressort à lame 291 fixé dans le fond de l'évidement par une vis 292 et ayant une branche 293 pliée à angle droit et ayant la forme d'une fourche, en contact avec les extrémités du galet 286 en saillie par rapport à celui-ci.

Ainsi, chaque galet 286 est sollicité par son ressort 291 en position sortie par rapport à la face incurvée 285 et par conséquent contre le rouleau 217.

Enfin, sur la Fig.19, on a représenté une butée 294 qui peut également être prévue dans le mode de réalisation de la Fig.15 et qui sert en coopération avec les galets 287 à permettre l'empilage des feuilles F de documents traités à mesure qu'ils sortent du dispositif.

A cet effet, la butée 294 comporte un bord incliné contre lequel les bords avant des feuilles F butent pour être ensuite poussées contre la pile de feuilles F déjà constituée contre le volet.

Le dispositif d'analyse de documents qui vient d'être décrit comporte également des moyens de traitement des informations lues par le détecteur d'images et des moyens de commande du moteur électrique pas à pas 250 pour permettre l'exploration du document par balayages successifs ligne après ligne.

Ces moyens qui ne font pas réellement partie de la présente invention, sont également décrits dans la demande de brevet précitée.

Dans le présent mode de réalisation, le dispositif selon l'invention étant essentiellement appliqué à l'analyse de bulletins et de reçus de jeux, le détecteur d'images 215 est constitué par un lecteur optique aveugle à au moins une couleur dans laquelle les informations fixes sont imprimées sur le document à examiner et sensible à d'autres couleurs afin de ne prendre en compte que les informations variables de jeux et les informations fixes de cadrage du document et de désignation du type de jeu auquel il appartient, imprimées dans ces autres couleurs.

Ce détecteur d'images est également décrit dans le document de brevet français FR-A-2 695 500 citée plus haut.

On comprendra cependant que le dispositif d'analyse de supports d'informations suivant l'invention peut comporter un détecteur d'images de construction différente à condition toutefois qu'il soit de type linéaire permettant une exploration par défilement des documents qui lui sont soumis.

On peut par exemple envisager de substituer au détecteur d'images décrit plus haut, un analyseur à lecture globale, d'analyse case par case d'un document et de reconnaissance positive des signes portés par le document, tel que ceux utilisés par exemple par les appareils de télécopie.

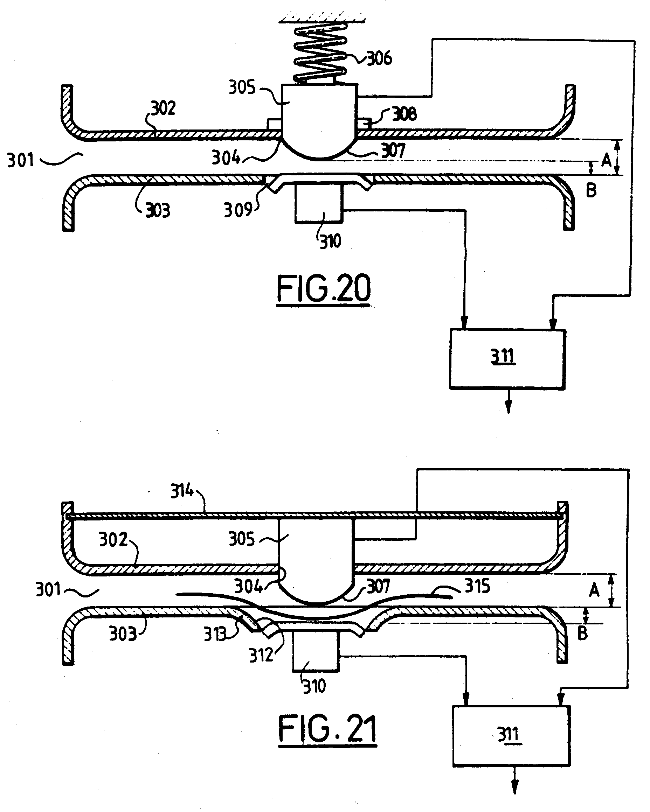

Le dispositif 11 de lecture de codes magnétiques et de codes optiques va être décrit en référence aux Fig.20 à 22.

Sur la Fig.20, on a représenté schématiquement en coupe une fente 301 de réception de supports de codes magnétiques réalisés généralement sous la forme de cartes d'épaisseur A et de supports de codes optiques de plus faible épaisseur et constitués quelquefois par des feuilles de papier ou autres sur lesquelles sont imprimés les codes à barre.

La fente 301 est délimitée par deux parois opposées 302 et 303.

Dans la paroi 302, est ménagé un orifice 304 dans lequel est montée une tête de lecture magnétique 305 sollicitée vers l'intérieur de la fente par un ressort 306 et présentant une extrémité 307 opposée au ressort, de forme arrondie permettant l'effacement de la tête lors de l'introduction d'une carte d'épaisseur A (non représentée) et l'application de celle-ci sous l'effet du ressort 306 contre les pistes magnétiques portées par la carte.

L'engagement de la tête magnétique 305 dans la fente 301, est limité à une valeur inférieure à la largeur A de la fente par une butée 308 coopérant avec la paroi 302 de la fente.

Dans la paroi 303, de la fente 301 oppposée à la paroi 302, est ménagé un autre orifice 309 dans lequel est disposée de façon fixe une tête de lecture optique 310, de manière à affleurer le bord intérieur de la paroi 303.

Ainsi, entre l'extrémité arrondie 307 de la tête magnétique et la paroi 303 de la fente opposée à la paroi 302, est ménagé un intervalle de largeur B qui permet lorsque la tête magnétique n'est pas utilisée le libre passage dans la fente d'un support de code optique de faible épaisseur et la lecture des codes à barres qu'il porte par le tête de lecture optique 310.

Selon un autre mode de réalisation, la tête magnétique 305 peut être montée sur la paroi au moyen d'un ressort à lame qui assure simultanément la fonction d'application de la tête de lecture 305 contre les pistes magnétiques de la carte et de limitation de l'engagement de la tête magnétique dans la fente 301 en l'absence de carte magnétique pour définir entre la tête de lecture magnétique et la tête de lecture optique 310, affleurant le bord intérieur de la paroi 303 un intervalle de largenr B pour l'introduction d'un support de code optique.

La tête magnétique 305 et la tête de lecture optique 310 sont toutes deux reliées à un circuit 311 tel qu'un microprocesseur faisant partie d'une installation équipée de la tête magnéto-optique suivant l'invention et destiné à reconnaître les signaux de sortie de l'une ou l'autre de ces têtes en vue de permettre un traitement ultérieur approprié des signaux.

Sur la Fig.21, on a représenté une variante du lecteur magnéto-optique suivant l'invention.

Dans cette variante, dont les éléments correspondants à ceux de la Fig.20 portent les mêmes numéros de référence, la fente 301 est également délimitée par des parois 302 et 303.

Dans la paroi 302, est ménagé un orifice 304 livrant passage à une tête de lecture magnétique 305.

Dans la paroi 303 de la fente opposée à la paroi 302, est en revanche ménagé un orifice 312 qui diffère de l'orifice 309 ménagé dans la paroi 303 du mode de réalisation de la Fig.20, en ce qu'il comporte des bords 313 arrondis pour permettre le positionnement d'une tête de lecture optique 310 légèrement en retrait par rapport au bord intérieur de la paroi 303.

La tête magnétique 305 est reliée à la paroi 302 de la fente 301 par une lame élastique 314 qui assure l'escamotage de la tête magnétique 305 lors de l'introduction d'une carte dans la fente 301 et l'application de la tête contre les pistes magnétiques de la carte.

En revanche, en l'absence de carte magnétique, la lame élastique 314 ramène la tête magnétique 305 dans une position de repos dans laquelle son extrémité arrondie 307 vient au niveau du bord intérieur de la paroi 303 de la fente dans laquelle est disposée la tête de lecture optique 310. Cependant, du fait que la tête de lecture optique est montée légèrement en retrait par rapport au bord intérieur de la paroi 303, un intervalle de largeur B est ménagé entre la tête magnétique 305 et la tête de lecture optique 310 pour le passage d'un support de code optique constitué par exemple par une feuille souple 315.

En fait, la position relative des têtes magnétique et optique 305 et 310 délimite dans ce mode de réalisation une chicane pour le passage du support de codes optiques souple.

Enfin, la variante de la Fig.21 comporte également un circuit 311 de reconnaissance des signaux de sortie des têtes de lecture magnétique et optique.

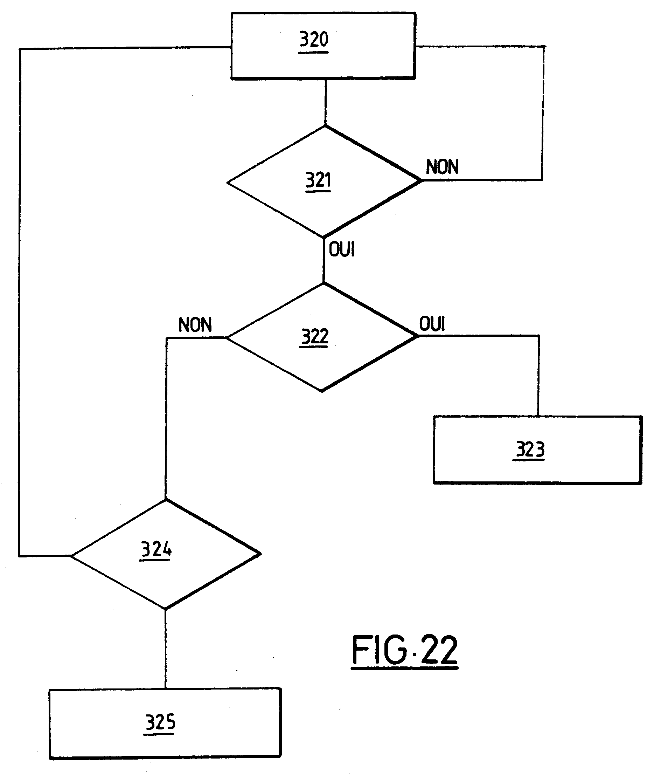

L'organigramme de la Fig.22 illustre un mode de reconnaissance de la nature des signaux émis par le dispositif lecture magnéto-optique suivant l'invention.

Au cours d'une phase 320, on procède d'abord à une lecture à l'aide du lecteur optique 310. La phase suivante 321 consiste à déterminer si un support de codes quelconque est présent ou non dans la fente 301. En cas d'absence de ce support, on revient à la phase 320.

Si un support est détecté dans la fente, au cours de la phase 322, on détermine s'il s'agit d'une carte magnétique.

Dans l'affirmative, on déclenche au cours de la phase 321, un traitement des signaux magnétiques.

Dans le cas contraire, on détermine au cours de la phase 324, si le support présent dans la fente 310 est un support de code optique.

Dans la négative, on revient à la phase 320. Dans l'affirmative, on procède au cours de la phase 325 au traitement des signaux optiques.

Bien entendu, la désignation de la nature des signaux émis par le dispositif de lecture magnéto-optique et le traitement de ces signaux, sont effectués dans le circuit 311 associé à ladite tête.

Un dispositif de lecture de codes magnétiques et de codes optiques, du type décrit dans le document FR-A-2 695 500, cité plus haut, peut avoir des applications les plus diverses qui ne sont bien entendu pas limités aux terminaux de jeu.

## Revendications

1. Terminal de jeux comprenant des moyens d'analyse de bulletins de jeux et de reçus, des moyens de traitement des informations résultant de l'analyse des supports d'informations, de conversion de ces données en données numériques et de transmission de ces données à un système de traitement à distance ou local par l'intermédiaire d'un réseau de communication, des moyens de réception de données de validation de bulletins de jeux et/ou de reçus en provenance du système de traitement à distance ou local, des moyens (10) d'affichage de données, un ensemble de clavier (9) associé à des moyens électroniques de commande des différentes fonctions du terminal, caractérisé en ce que les moyens d'analyse des bulletins de jeux et de reçus sont constitués par un dispositif d'analyse de supports d'informations (4,101,102,104,105,107, 108) commun comprenant des moyens d'analyse des signes inscrits par les joueurs sur les bulletins et des moyens de lecture de codes à barres représentant les numéros de validation des reçus et en ce que ces moyens de traitement comportent des moyens de mémorisation à grande capacité, fractionnables et à consommation d'énergie de rétention nulle (35), d'une part des instructions de fonctionnement du terminal qui leur sont transmises à partir du système de traitement et d'autre part des données de jeu reçues par le terminal et en ce qu'il comporte en outre des moyens à clé à circuit intégré (12,73,74) d'autorisation ou d'interdiction de l'accès au terminal.

2. Terminal suivant la revendication 1, caractérisé en ce que les moyens d'analyse des bulletins de jeu et des reçus comprennent des moyens (102,104) d'introduction du support (103), des moyens (101) de lecture des informations se trouvant sur le support, des moyens (105) de traitement des informations lues sur le support en vue de leur conversion en données numériques et de leur transmission vers une unité centrale de gestion des jeux, les moyens (101) de lecture des informations se trouvant sur le support comprenant un lecteur optique aveugle à au moins une couleur dans laquelle des informations fixes sont imprimées sur le bulletin et sensible à d'autres couleurs, afin de ne prendre en compte que les informations variables (127) de jeu et les informations fixes (123,124,125) de cadrage du support et de désignation du type de jeu auquel il appartient, imprimées dans ces autres couleurs, lesdits moyens de traitement (105) comprenant pour l'analyse des bulletins de jeu, des moyens de génération de grilles correspondant au type de jeu auquel appartient le bulletin en vue de la reconstitution des zones à analyser du bulletin par superposition aux données variables et aux données fixes de cadrage et de type de jeu, des données fixes de grille auxquelles le lecteur d'image a été rendu aveugle, les moyens de traitement (105) comprenant en outre pour l'analyse de reçus, des moyens de lecture de codes barres (130,131,132) correspondant aux numéros de validation des bulletins de jeu.

3. Terminal suivant l'une des revendications 1 et 2, caractérisé en ce que les moyens de mémorisation à grande capacité et à faible consommation d'énergie sont constitués par une mémoire EEPROM segmentée (35) du type "Flash".

4. Terminal suivant l'une des revendications 1 à 3, caractérisé en ce qu'il comporte en outre une carte mémoire EEPROM segmentée (36) enfichable, associée à la mémoire de type "flash" (35) et destinée à stocker des données d'instructions pour le terminal et des données de jeux reçues par le terminal analogues à celles stockées dans la mémoire EEPROM (35) et à permettre le transport de ces données vers un centre de traitement éloigné.

5. Terminal suivant l'une des revendications 1 à 4, caractérisé en ce qu'il comporte en outre un dispositif (59, 301, 305, 310) de lecture de codes magnétiques et de codes optiques associé au dispositif (4) d'analyse de supports d'informations.

6. Terminal suivant la revendication 5, caractérisé en ce que le dispositif de lecture de codes magnétiques et de codes optiques portés respectivement par des cartes d'épaisseur déterminée et par des supports de plus faible épaisseur comporte, montées dans des parois opposées (302,303) d'une fente commune d'une largeur légèrement supérieure à l'épaisseur d'une carte magnétique, une tête (305) de lecture magnétique associée à des moyens élastique (306;314) d'application de la tête magnétique (305) contre les pistes magnétiques de la carte, et une tête (310) de lecture optique, des moyens (311;314) pour limiter en l'absence de carte magnétique, l'engagement de la tête de lecture magnétique dans la fente (301) sur une partie de la largeur de celle-ci afin de laisser entre la tête magnétique et la paroi de la fente opposée à celle-ci, un intervalle (B) suffisant pour le passage d'un support de codes optiques, et des moyens (311) de reconnaissance des signaux de sorties de la tête (305) de lecture magnétique ou de la tête (310) de lecture optique.

7. Terminal suivant l'une des revendications 1 à 6, caractérisé en ce qu'il comporte en outre un lecteur (13) de carte à circuit intégré associé au dispositif (4) d'analyse de supports d'informations.

8. Terminal suivant l'une des revendications 1 à 7, caractérisé en ce qu'il comporte en outre des moyens (45,71,75), de contrôle de l'alimentation (70) du terminal destinés à n'autoriser la connexion de l'alimentation au secteur que si le code contenu par le circuit intégré (74) de la clé (73) à circuit intégré introduite dans le terminal est le bon code d'accès à ce terminal.

9. Terminal suivant l'une des revendications 1 à 8, dont les moyens électroniques de commande des différentes fonctions du terminal comprennent un microprocesseur (20) comprenant une unité centale de traitement, des mémoires et des circuits d'interface (21 à 31) avec des dispositifs périphériques, un bus (33) assurant en outre la liaison du microprocesseur (20) avec un modem (34) de liaison avec le réseau de communication, un circuit (38,39,40) de liaison avec un réseau local d'interconnexion, un circuit (41) de liaison d'unités de stockage entre elles, caractérisé en ce que le bus (32) assure en outre la liaison du microprocesseur (20) avec la mémoire EEPROM segmentée (35) et avec la mémoire EEPROM segmentée enfichable (36) qui lui est associée, et en ce qu'il comporte en outre un circuit auxiliaire (33) contenant une unité de traitement autonome, une mémoire et des moyens logiques de contrôle, ledit circuit auxiliaire (33) étant relié au microprocesseur (20) par le bus (32) et étant à son tour relié au dispositif (4) d'analyse de surpports d'informations, au circuit (45) de contrôle de l'alimentation du terminal à un circuit (46) d'interface avec l'ensemble de clavier (9), à une imprimante thermique (7) et à un circuit (44) de contrôle d'ouverture et de fermeture d'une caisse enregistreuse.

10. Terminal suivant l'une des revendications 1 à 9, caractérisé en ce que l'ensemble de clavier (9) comporte un circuit (54) associé à l'ensemble (12) à clé à circuit intégré (73,74), un circuit (59) de commande du dispositif (11) de lecture de codes magnétiques et de codes optiques, un circuit (59) de commande du lecteur (13) de carte à circuit intégré, un circuit (60) de commande de dispositifs d'affichage à cristaux liquide (10,61) destinés respectivement au détaillant et aux joueurs.

11. Terminal suivant l'une des revendications 7 à 10, caractérisé en ce que les moyens de contrôle de l'alimentation (70) du terminal comportent le boîtier (12) à clé (73) à circuit intégré (74), relié d'une part, à l'unité centrale du microprocesseur (20) et à la mémoire EEPROM segmentée (35) et d'autre part, à un circuit logique (75) de commande d'un interrupteur (71) de l'alimentation (70) au secteur, le circuit logique (75) étant de plus relié à l'unité centrale du microprocesseur (20) et en recevant des signaux indiquant l'exactitude ou l'inexactitude du code contenu dans le circuit intégré (74) de la clé (73) à circuit intégré.

12. Terminal suivant la revendication 9, caractérisé en ce que le circuit (41) de liaison d'unités de stockage assure la liaison du terminal avec au moins une unité multi-média.

## Claims

1. Games terminal comprising means for analysing games tickets and receipts, means for processing data resulting from the analysis of the data carriers, for converting these data into digital data and for transmitting these data to a remote or local processing system through the intermediary of a communication network, means for receiving data for validation of game tickets and/or of receipts originating from the remote or local processing system, means (10) for displaying data, a keyboard unit (9) associated with electronic means for controlling the various functions of the terminal, characterised in that the means for analysing the games tickets and receipts are formed by a common device for analysing data carriers (4, 101, 102, 104, 105, 107, 108) comprising means for analysing the marks written by the players on the tickets and means for reading bar codes representing the validation numbers of the receipts and that these processing means include high-capacity storage means, which can be split up and have zero retention power consumption (35), on the one hand for the instructions for operating the terminal which are transmitted to them from the processing system and on the other hand for the game data received by the terminal, and that it also includes integrated circuit key means (12, 73, 74) for authorising or prohibiting access to the terminal.

2. Terminal as claimed in Claim 1, characterised in that the means for analysing the game tickets and the receipts comprises means (102, 104) for introducing the carrier (103), means (101) for reading the data located on the carrier, means (105) for processing the data read on the carrier with a view to converting them into digital data and transmitting them towards a central unit for management of the games, means (101) for reading the data located on the carrier comprising an optical reader which is blind to at least one colour in which fixed data are printed on the ticket and sensitive to other colours so that it only takes account of the variable game data (127) and the fixed data (123, 124, 125) for registration of the carrier and for designation of the type of game to which it belongs, printed in these other colours, the said processing means (105) comprising for the analysis of the game tickets means for generating grids corresponding to the type of game to which the ticket belongs with a view to reconstituting zones to be analysed on the ticket by superimposing fixed grid data to which the image reader has been rendered blind on the variable data and on the fixed data for registration and for the type of game, the processing means (105) also comprising for analysis of receipts means for reading bar codes (130, 131, 132) corresponding to the validation numbers of the game tickets.

3. Terminal as claimed in one of Claims 1 and 2, characterised in that the high-capacity storage means with low power consumption consist of a flash-type segmented EEPROM (35).

4. Terminal as claimed in one of Claims 1 to 3, characterised in that it also includes a slot-in segmented EEPROM memory card associated with the flash-type memory (35) and intended to store instruction data for the terminal and games data received by the terminal analogous to those stored in the EEPROM (35) and to permit the transmission of these data to a remote processing centre.

5. Terminal as claimed in one of Claims 1 to 4, characterised in that it also includes a device (59, 301, 305, 310) for reading magnetic codes and optical codes associated with the device (4) for analysing data carriers.

6. Terminal as claimed in Claim 5, characterised in that the device for reading magnetic codes and optical codes borne respectively by cards of predetermined thickness and by carriers of lesser thickness includes, mounted in opposing walls (302, 303) of a common slot having a width slightly greater than the thickness of a magnetic card, a magnetic reading head (305) associated with resilient means (306; 314) for applying the magnetic head (305) to the magnetic tracks of the card, and an optical reading head (310), means (311; 314) which in the absence of a magnetic card limit the engagement of the magnetic reading head in the slot (301) over a part of the width of the letter in order to leave between the magnetic head and the wall of the slot opposite the latter a gap (B) which is sufficient for the passage of an optical code carrier, and means (311) for recognising output signals from the magnetic reading head (305) or from the optical reading head (310).

7. Terminal is claimed in one of Claims 1 to 6, characterised in that it also includes an integrated circuit card reader associated with the device (4) for analysing data carriers.

8. Terminal as claimed in one of Claims 1 to 7, characterised in that it also includes means (45, 71, 75) for controlling the power supply (70) to the terminal, these means being intended to authorise the connection of the power supply to the sector only if the code contained by the integrated circuit (74) of the integrated circuit key (73) introduced into the terminal is the right code for access to this terminal.

9. Terminal as claimed in one of Claims 1 to 8, in which the electronic means for controlling the different functions of the terminal comprise a microprocessor (20) comprising a central processing unit, memories and circuits (21 to 31) to interface with peripheral devices, a bus (33) which also ensures the connection of the microprocessor (20) to a modem (34) for connection to the communication network, a circuit (38, 39, 40) for connection to a local interconnection network, a circuit (41) for connecting storage units to one another, characterised in that the bus (32) also ensures the connection of the microprocessor (20) to the segmented EEPROM (35) and to the slot-in segmented EEPROM (36) associated therewith, and that it also includes an auxiliary circuit (33) containing a stand-alone processing unit, a memory and control logic means, the said auxiliary circuit (33) being connected to the microprocessor (20) by the bus (32) and being in turn connected to the device (4) for analysing data carriers, to the circuit (45) for controlling the power supply of the terminal to a circuit (46) for interface with the keyboard unit (9), to a thermal printer (7) and to a circuit (44) for controlling the opening and closing of a cash register.

10. Terminal as claimed in one of Claims 1 to 9, characterised in that the keyboard unit (9) includes a circuit (54) associated with the assembly (12) of the integrated circuit key (73, 74), a circuit (59) for controlling the device (11) for reading magnetic codes and optical codes, a circuit (59) for controlling the integrated circuit card reader (13), a circuit (60) for controlling liquid crystal display devices (10, 61) intended respectively for the retailer and for the players.

11. Terminal as claimed in one of Claims 7 to 10, characterised in that the means for controlling the power supply (70) to the terminal include the housing (12) for the key (73) with the integrated circuit (74), connected on the one hand to the central unit of the microprocessor (20) and to the segmented EEPROM (35) and on the other hand to a logic circuit (75) for controlling a switch (71) for the power supply (70) to the sector, the logic circuit (75) being moreover connected to the central unit of the microprocessor (20) and receiving therefrom signals indicating the accuracy or inaccuracy of the code contained in the integrated circuit (74) of the integrated circuit key (73).

12. Terminal as claimed in Claim 9, characterised in that the circuit (41) for connecting storage units ensures the connection of the terminal to at least one multi-media unit.

## Patentansprüche

1. Spielterminal mit Mitteln für die Analyse von Spielberichten und Empfangsbestätigungen, und mit Mitteln für die Datenverarbeitung der Informationen, welche sich aus der Analyse der Datenträger ergeben, und für die Umwandlung dieser Daten in numerische Daten und für die Übertragung dieser Daten mit Hilfe eines Kommunikationsnetzes an ein datenverarbeitendes Teilnehmersystem oder an einen angeschlossenen Nebenraum, sowie mit Mitteln für den Empfang der Daten für die Freigabe von Spielberichten und/oder Empfangsbestätigungen, welche aus dem datenverarbeitenden Teilnehmerssystem oder dem angeschlossenen Nebenraum empfangen werden, sowie mit Mitteln (10) für das Display von Daten, und mit einer mit den elektronischen Mitteln für die Steuerung der verschiedenen Funktionen des Spielterminals verbundenen Tastatur (9),
**dadurch gekennzeichnet, daß**
die Mittel für die Analyse der Spielberichte und der Empfangsbestätigungen aus einem gemeinsamen Gerät für die Analyse von Datenträgern (4, 101, 102, 104, 105, 107, 108) bestehen, welches Mittel für die Analyse der von den Spielern in den Spielberichten vorgenommenen Eintragungen aufweist, und daß Mittel für die Ablesung von Strichcoden vorgesehen sind, welche die Nummern für die Freigabe der Empfangsbestätigungen darstellen und dadurch, daß die Mittel für die Datenverarbeitung einen Großraumspeicher (35) aufweisen, welcher unterteilbar ist und praktisch keine Speicherenergie verbraucht, und der einerseits die funktionellen Instruktionen des Spielterminals speichert, welche ihm von dem datenverarbeitenden System zugeleitet werden, und andererseits die von dem Spielterminal empfangenen Spieldaten speichert, und dadurch daß es außerdem ein Mittel mit einem Sclüsselcode mit einem integrierten Schaltkreis (12, 73, 74) für die Zulassung oder die Verweigerung des Zugangs zu dem Spielterminal aufweist.

2. Spielterminal nach Anspruch 1,
**dadurch gekennzeichnet, daß**
die Mittel für die Analyse der Spielberichte und Empfangabestätigungen Mittel (102, 104) für die Einlegung des Datenträgers (103), Mittel (101) für die Ablesung der auf dem Datenträger aufgezeichneten Informationen, Mittel (105) für die Datenverarbeitung der von dem Datenträger abgelesenen Informationen umfassen, um sie in numerische Daten umzuwandeln und sie an eine zentrale Einheit für die Leitung der Spiele zu leiten, wobei die Mittel (101) für die Ablesung der auf dem Datenträger befindlichen Informationen ein blindes optisches Lesegerät mit mindestens einer Farbe enthalten, in der die festen Informationen auf dem Spielbericht ausgedruckt werden und welches auch für weitere Farben empfänglich ist, so daß nur die variablen Spieldaten (127) und die festen Bilddaten (123, 124, 125) des Datenträgers und der Bezeichnung des Typs des zugehörigen Spiels berücksichtigt werden, welche in diesen anderen Farben ausgedruckt werden, wobei diese Mittel für die Datenverarbeitung (105) für die Analyse der Spielberichte Mittel für die Erzeugung von Rastern enthalten, welche der Art des Spiels entsprechen, zu dem der Spielbericht gehört, um dadurch die zu analysierenden Zonen des Spielberichtes durch eine Überdeckung der variablen Daten und der festen Bilddaten und der Art des Spiels mit den festen Daten des Rasters, die für den Betrachter des Bildes unsichtbar gemacht worden sind, wieder herzustellen, wobei die Mittel für die Datenverarbeitung (105) für die Analyse von Empfangsbestätigungen außerdem Mittel für die Ablesung von Strichcoden (130, 131, 132) enthalten, welche den Freigabenummern der Spielberichte entsprechen.

3. Spielterminal nach einem der Ansprüche 1 oder 2,
**dadurch gekennzeichnet, daß**
der Großraumspeicher mit geringem Energieverbrauch aus einem segmentierten EEPROM-Speicher (35) vom Typ 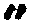 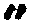 Flash" besteht.

4. Spielterminal nach einem der Ansprüche 1 bis 3,
**dadurch gekennzeichnet, daß**
es außerdem eine segmentierte steckbare EEPROM-Speicherkarte (35) enthält, welche mit dem Speicher vom Typ 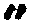 Flash" verbunden und dafür vorgesehen ist, Instruktionsdaten für das Spielterminal und die aus dem Spielterminal empfangenen Spieldaten zu speichern. welche denjenigen gleich sind, die in dem EEPROM-Speicher (35) gespeichert sind, und die Übertragung dieser Daten an ein in einigem Abstand angeordnetes datenverarbeitendes Zentrum ermöglichen.

5. Spielterminal nach einem der Ansprüche 1 bis 4,
**dadurch gekennzeichnet, daß**
es weiterhin ein Lesegerät (59, 301, 305, 310) für magnetische Code und optische Code aufweist, welches mit dem Gerät (4) für die Analyse der Datenträger verbunden ist.

6. Spielterminal nach Anspruch 5,
**dadurch gekennzeichnet, daß**
das Lesegerät für die magnetischen Code und die optischen Code, welche jeweils von Karten bestimmter Dicke und von Datenträgern geringerer Dicke getragen werden, in den gegenüberliegenden Wänden (302, 303) eines gemeinsamen Spaltes montiert sind, welcher eine Breite hat, die etwas größer ist, als die Dicke einer Magnetkarte, und einen magnetischen Lesekopf (305) aufweist, welcher mit elastischen Mitteln (306; 314) für das Anlegen des Magnetkopfes (305) an die Magnetspuren der Karten ausgestattet ist, sowie einen optischen Lesekopf (310) besitzt und Mittel (311; 314) aufweist, um bei Fehlen einer Magnetkarte den Eingriff des magnetischen Lesekopfes in den Spalt (301) auf einen Teil der Breite dieses Spaltes zu begrenzen, um zwischen dem Magnetkopf und der gegenüberliegenden Wand des Spaltes einen ausreichenden Zwischenraum (B) für den Durchgang eines Datenträgers für optische Code zu lassen, sowie Mittel (311) für die Erkennung der Ausgangssignale des magnetischen Lesekopfes (305) oder des optischen Lesekopfes (310) enthält.

7. Spielterminal nach einem der Ansprüche 1 bis 7,
**dadurch gekennzeichnet, daß**
es außerdem einen Kartenleser (13) mit einem integrierten Schaltkreis aufweist, welcher mit dem Gerät (4) für die Analyse der Datenträger verbunden ist.

8. Spielterminal nach einem der Ansprüche 1 bis 7,
**dadurch gekennzeichnet, daß**
es weiterhin Mittel (45, 71, 75) für die Steuerung der Versorgung (70) des Spielterminals aufweist, welche dafür bestimmt sind, den Anschluß der Versorgung an das Netz nur dann zuzulassen, wenn der in dem integrierten Schaltkreis (74) des Schlüsselcodes (73) mit integriertem Schaltkreis enthaltene Code, welcher in das Spielterminal eingegeben ist, der richtige Schlüsselcode für den Zugang zu diesem Spielterminal ist.

9. Spielterminal nach einem der Ansprüche 1 bis 8, dessen elektronische Einrichtungen für die Steuerung der verschiedenen Funktionen des Spielterminals einen Mikroprozessor (20) mit einer zentralen datenverarbeitenden Einheit enthält, sowie Speicher und Schnittstellenleitungen (21 bis 31) für den Anschluß an die peripheren Einrichtungen besitzt, sowie eine Busleitung (33) enthält, welche außerdem die Verbindung des Mikroprozessors (20) mit einem Modern (34) für den Anschluß an ein Kommunikationsnetz enthält, sowie eine Anschlußleitung (38, 39, 40) für die Verbindung mit einer lokalen Zusammenschaltung besitzt, und schließlich einen Schaltkreis (41) für die Verbindung der Speichereinheiten untereinander aufweist,
**dadurch gekennzeichnet, daß**
die Busleitung (32) außerdem die Verbindung des Mikroprozessors (20) mit dem segmentierten EEPROM-Speicher (35) und mit dem zugehörigen steckbaren segmentierten EEPROM-Speicher (36) herstellt, und dadurch, daß es außerdem einen Betriebsstromkreis (33) aufweist, welcher über die Busleitung (32) mit dem Mikroprozessor (20) verbunden ist und andererseits an das Gerät (4) für die Analyse der Datenträger, an den Steuerkreis (45) für die Versorgung des Spielterminals, an eine Schnittstellenleitung (46) für die Verbindung mit der Tastatur (9), an einen thermischen Druckar (7) und an einen Kontrollkreis (44) für die Öffnung und Schließung einer Registrierkasse angeschlossen ist.

10. Spielterminal nach einem der Ansprüche 1 bis 9,
**dadurch gekennzeichnet, daß**
die Tastatur (9) einen mit dem Schlüsselcode (12) mit integrierter Schaltung (73, 74) verbundenen Schaltkreis (54) aufweist, sowie einen Steuerkreis (59) für den Kartenleser (13) mit integriertem Schaltkreis, sowie einen Steuerkreis (60) für die mit Flüssigkristallen ausgerüsteten Displayvorrichtungen (10, 61) aufweist, welche jeweils für den Spielleiter und die Spieler bestimmt sind.

11. Spielterminal nach einem der Ansprüche 7 bis 10,
**dadurch gekennzeichnet, daß**
die Mittel für die Kontrolle der Versorgung (70) des Spielterminals das Gehäuse (12) eines Schlüsselcodes (73) mit integriertem Schaltkreis (74) aufweist, welches einerseits mit der Zentraleinheit des Mikroprozessors (20) und mit dem segmentierten EEPROM-Speicher (35) und andererseits mit einem logischen Schaltkreis (75) für die Betätigung eines Umschalters (71) für den Anschluß der Versorgung (70) an das Netz verbunden ist, wobei der logische Schaltkreis (75) außerdem an die Zentraleinheit des Mikroprozessors (20) angeschlossen ist und durch Erhalt von Signalen anzeigt, ob der in dem integrierten Schaltkreis (74) des Schlüsselcodes (73) mit integriertem schaltkreis enthaltene Code richtig oder falsch ist.

12. Spielterminal nach Anspruch 9,
**dadurch gekennzeichnet, daß**
der Schaltkreis (41) für die Verbindung der Speichereinheiten den Anschluß des Spielteminals an mindestens eine Multimedia-Einheit ermöglicht.
